# EUROPEAN PATENT APPLICATION

(11) **EP 4 527 802 A1**
(43) Date of publication of application: **26.03.2025**
(21) Application number: 24189744.6
(22) Date of filing: 19.07.2024
(51) Int. Cl.: C01G 41/00, H01M 4/485, H01M 10/0525

(54) **ACTIVE MATERIAL, ELECTRODE, SECONDARY BATTERY, BATTERY PACK, AND VEHICLE**

(30) Priority: 20.09.2023 JP 2023151957
(71) Applicant: Kabushiki Kaisha Toshiba, Minato-ku Tokyo (JP)
(72) Inventor: ISE, Kazuki, Tokyo (JP); HARADA, Yasuhiro, Tokyo (JP); TAKAMI, Norio, Tokyo (JP)
(74) Representative: Marks & Clerk LLP

(57) **Abstract**

An active material includes a composite oxide represented by the general formula LiₐTi_{b}Nb₂W_{c}O_{2b+3c+5+δ} and satisfying 0 ≤ a ≤ b + 3c + 4, 0 < b < 2, 0 < c < 2, 1.9b + 2.85c + 4.75 ≤ δ ≤ 2.1b + 3.15c + 5.25. A crystal structure of the composite oxide is at least one of a monoclinic structure and an orthorhombic structure.

## Description

### CROSS-REFERENCE TO RELATED APPLICATIONS

This application is based upon and claims the benefit of priority from Japanese Patent Application No. 2023-151957 filed on September 20, 2023, and the entire contents of which are incorporated herein by reference.

### FIELD

Embodiments described herein relate generally to an active material, an electrode, a secondary battery, a battery pack, and a vehicle.

### BACKGROUND

Recently, as a high energy density battery, secondary batteries such as a lithium-ion secondary battery and a nonaqueous electrolyte secondary battery have been actively studied and developed.

The secondary battery is expected as a power source for vehicles such as a hybrid automobile and an electric automobile, or an uninterruptible power source for base stations for portable telephones, or the like. Therefore, the secondary battery is also required to, in addition to having a high energy density, be excellent in other performances such as rapid charge-discharge performances and long-term reliability.

Examples of a negative electrode of a general lithium ion secondary battery include a carbon-based negative electrode using a carbonaceous material, such as graphite, as an active material. When a battery using a carbon-based negative electrode is repeatedly charged and discharged at a rapid rate, dendrites of metallic lithium may be precipitated on the electrode, raising a concern of heat generation or ignition due to an internal short circuit.

Therefore, a battery has been developed which uses a metal composite oxide in a negative electrode in place of a carbonaceous material to increase the operation potential of the negative electrode. For example, a battery using a spinel-type lithium titanium composite oxide Li₄Ti₅O₁₂ in the negative electrode has a high average operating potential of 1.55 V (vs. Li/Li⁺) . Therefore, such a battery can be stably and rapidly charged and discharged, because precipitation of Li dendrites does not proceed, and also has a longer life than that of a battery which uses a carbon-based negative electrode, because Li₄Ti₅O₁₂ operates at a potential at which reductive side reactions of an electrolytic solution hardly occur.

However, a battery using Li₄Ti₅O₁₂ in the negative electrode has a drawback in that the theoretical capacity of the active material is as low as 175 mAh/g, and so, the energy density of the battery is lower than that of a battery including a carbon-based negative electrode.

Therefore, tetragonal niobium titanium composite oxides Ti₂Nb₁₀W₅O₄₄ and TiNb₂WO₁₀ have been considered. The tetragonal niobium titanium composite oxide is an active material exhibiting a high capacity while having an operating potential near 1 V (vs. Li/Li⁺) based on the oxidation-reduction potential of lithium. For this reason, the tetragonal niobium titanium composite oxide is expected to achieve a volume energy density exceeding that of the carbon-based negative electrode.

However, to commercialize electric vehicles on a full-scale, further enhancement of the energy density of lithium ion secondary batteries is desired from the viewpoint of achieving an increased traveling distance and the like, and thus, development of a rapid-charge battery having an even higher capacity is being desired.

### BRIEF DESCRIPTION OF THE DRAWINGS

Fig. 1 is a schematic view showing the crystal structure of an example of a composite oxide contained in an active material according to an embodiment.
Fig. 2 is a schematic view showing the crystal structure of another example of a composite oxide contained in an active material according to an embodiment.
Fig. 3 is a cross-sectional view schematically showing an example of a secondary battery according to an embodiment.
Fig. 4 is an enlarged cross-sectional view of a part A of the secondary battery shown in Fig. 3.
Fig. 5 is a partially cut-out perspective view schematically showing another example of a secondary battery according to an embodiment.
Fig. 6 is an enlarged cross-sectional view of a part B of the secondary battery shown in Fig. 5.
Fig. 7 is a perspective view schematically showing an example of a battery module according to an embodiment.
Fig. 8 is an exploded perspective view schematically showing an example of a battery pack according to an embodiment.
Fig. 9 is a block view showing an example of an electric circuit of the battery pack shown in Fig. 8.
Fig. 10 is a partially see-through view schematically showing an example of a vehicle according to an embodiment.
Fig. 11 is a view schematically showing an example of a control system related to an electric system in a vehicle according to an embodiment.
Fig. 12 is a view showing an atomic image observed using a scanning transmission electron microscope of an active material composite oxide in Example 1.
Fig. 13 is a view showing an atomic image observed using a scanning transmission electron microscope of an active material composite oxide in Comparative Example 1.

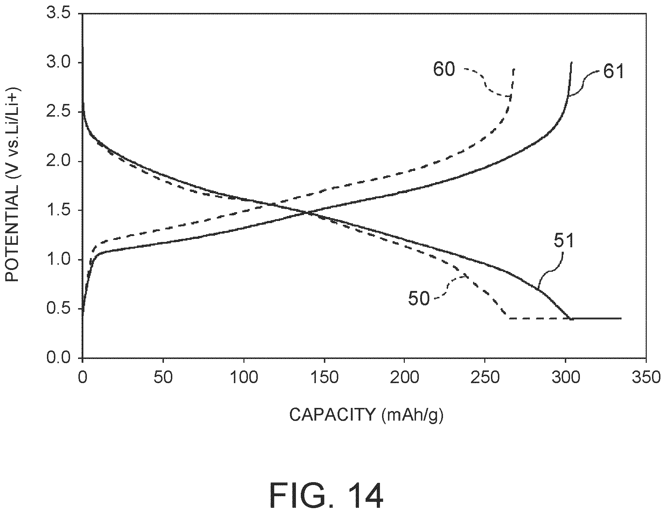

Fig. 14 is a graph showing initial charge-discharge curves in Example 1 and Comparative Example 1.

### DETAILED DESCRIPTION

Hereinafter, embodiments will be described with reference to the drawings. In the following description, components that exhibit the same or similar functions are denoted by the same reference numerals throughout all the drawings, and redundant description will be omitted. Each drawing is a schematic view for promoting the description of the embodiment and the understanding thereof, and the shape, size, and ratio and the like are different from those of the actual device, but these can be appropriately modified in design in consideration of the following description and known techniques.

### [First Embodiment]

According to a first embodiment, there is provided an active material containing a composite oxide having at least one crystal structure of a monoclinic structure and an orthorhombic structure. The composite oxide is represented by the general formula LiₐTi_{b}Nb₂W_{c}O_{2b+3c+5+δ}. The subscripts in the formula satisfy 0 ≤ a ≤ b + 3c + 4, 0 < b < 2, 0 < c < 2, 1.9b + 2.85c + 4.75 ≤ δ ≤ 2.1b + 3.15c + 5.25. The active material according to the embodiment may contain minuscule amounts of additive elements as described later, and forms including the minuscule additive elements in the composite oxide as substituent elements are also included in the first embodiment, but the above general formula represents a composition with such minuscule additive elements omitted.

The active material according to the embodiment may be an active material for a battery. The active material may be, for example, an electrode active material used for an electrode of a secondary battery such as a lithium ion battery or a nonaqueous electrolyte battery. More specifically, the active material may be, for example, a negative electrode active material used for a negative electrode of the secondary battery.

By using a composite oxide represented by the general formula LiₐTi_{b}Nb₂W_{c}O_{2b+3c+5+δ} (0 ≤ a ≤ b + 3c + 4, 0 < b < 2, 0 < c < 2, 1.9b + 2.85c + 4.75 ≤ δ ≤ 2.1b + 3.15c + 5.25) and having at least one crystal structure of a monoclinic structure and an orthorhombic structure as an electrode active material, a high-capacity secondary battery can be achieved.

The composite oxide contained in the active material according to the embodiment corresponds to a part of an oxide material having the structure of a Wadsley-Roth phase, which is a crystal phase in an oxide material containing niobium. It has been reported that the Wadsley-Roth phase has a crystal structure in the range of 2.33 ≤ A_{O}/A_{M} ≤ 2.65, where, with respect to the ratio of oxygen O to a metal element M in the composition, the number of atoms of oxygen and the number of atoms of the metal element are respectively A_{O} and A_{M}. For example, TiNb₂O₇ has a crystal structure on the reduction side where A_{O}/A_{M}=2.33.

Herein, the reduction means that the proportion of oxygen in the structure is low. The Wadsley-Roth phase has a crystal structure in which the vertex sharing structure of the octahedra of oxygen-metal forms a rhenium oxide-type block structure, and the blocks share edges of the octahedra, or tetrahedra are interposed between the blocks and shares vertices, so that the rhenium oxide-type blocks (ReO₃-type blocks) are connected in a two-dimensional direction. The size of the block corresponds to 4×4=16 octahedra. The crystal structure on the reduction side takes a structure with small rhenium oxide-type blocks. Although the rhenium oxide-type crystal structure has cavities into which a large amount of lithium (Li) can be inserted, the crystal structure is highly symmetric, and thus a change in the bond length between the metal element and the oxygen element for resolving the charge repulsion occurring upon Li insertion hardly occurs. Therefore, the rhenium oxide-type crystal structure can be said to be a structure which restricts Li insertion, due to the charge repulsion occurring upon Li insertion. With the crystal structure on the reduction side, the ratio A_{O}/A_{M} becomes small, and thus the number of oxygen in the structure is reduced, leading to reduction of the size of the rhenium oxide-type blocks. As a result, there may be obtained a crystal structure capable of volume expansion due to a change in the bond length between the metal element and the oxygen element when Li is inserted. Therefore, while having a wide cavity by including the rhenium oxide-type crystal structure, Li insertion in great amount can be accomplished since there is no restriction on the structural change occurring when Li is inserted.

With the composite oxide contained in the active material according to the embodiment, as well, by taking a reduced-side crystal structure as with TiNb₂O₇, insertion of greater amounts of lithium (Li) into the crystal structure has become possible, and thus a crystal structure having a large reversible capacity has been obtained. That is, the crystal structure of the composite oxide contained in the active material according to the embodiment is a reduced-side crystal structure belonging to the Wadsley-Roth phase composed of three elements including titanium as a tetravalent element of low valence.

In the general formula LiₐTi_{b}Nb₂W_{c}O_{2b+3c+5+δ}, the subscripts a, b, c, and δ may be included in the ranges of 0 ≤ a ≤ b + 3c + 4, 0 < b < 2, 0 < c < 2, and 1.9b + 2.85c + 4.75 ≤ δ ≤ 2.1b + 3.15c + 5.25, respectively. The subscripts b and c preferably fall within the ranges of 0.4 ≤ b ≤ 1.6 and 0.4 ≤ c ≤ 1.6, respectively, and more preferably fall within the ranges of 0.6 ≤ b ≤ 1.2 and 0.6 ≤ c ≤ 1.2, respectively.

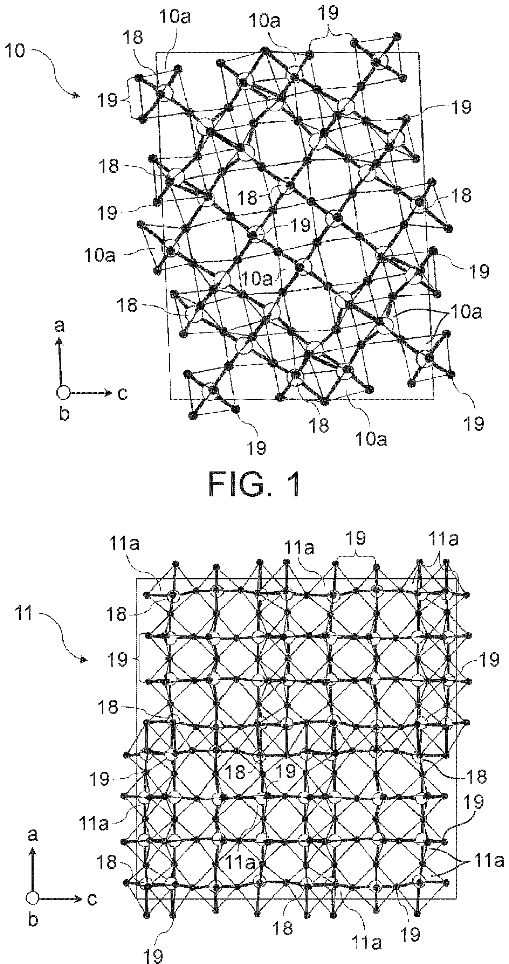

As an example of the monoclinic titanium-niobium-tungsten composite oxide represented by the general formula LiₐTi_{b}Nb₂W_{c}O_{2b+3c+5+δ}, a schematic view of a crystal structure of Ti₄Nb₁₀W₄O₄₅ is shown in Fig. 1. In Fig. 1, the crystal structure is presented in terms of a unit lattice in the [010] direction, as viewed along the b-axis direction. Although the stoichiometric ratio in the composite oxide is represented as Ti₄Nb₁₀W₄O₄₅, the composition is equal to the formula of Ti_{0.8}Nb₂W_{0.8}O₉. The notation of the space group of the crystal structure belongs to P21/n, and the space group number thereof is attributed to 14. The space group as mentioned herein corresponds to the content of Vol.A: Space-group symmetry in "International Tables for Crystallography" (2016).

Here, the space group is not limited to P21/n, and can also be described by coordinate transformation by other space groups belonging to the space group number 14, such as P21/c, P21/a, and P21/b, and are equivalent crystal structures. In the crystal structure of Fig. 1, the b axis is a unique axis, but the a axis and the c axis may be the unique axis without limitation. In Ti₄Nb₁₀W₄O₄₅, the ratio of the number of atoms A_{O} of oxygen O to the number of atoms A_{M} of the metal element M (including Ti, Nb, and W) is A_{O}/A_{M}=2.50. The monoclinic structure 10 includes octahedra 10a composed of a metal element 18 and an oxygen element 19. The octahedra 10a are connected to each other by sharing of vertices to constitute a rhenium oxide type block (ReO₃ type block). The size of the block corresponds to 4×4=16 octahedra. The rhenium oxide type block forms a plane in the a-axis direction and the c-axis direction by sharing the edges of the octahedra 10a. A plurality of planes including the 16 octahedra 10a are connected to each other by sharing the edges of the octahedra also towards the c-axis side, thereby forming a crystal structure.

As an example of the orthorhombic titanium-niobium-tungsten composite oxide represented by the general formula LiₐTi_{b}Nb₂W_{c}O_{2b+3c+5+δ}, a schematic view of a crystal structure of Ti₄Nb₁₀W₄O₄₅ is shown in Fig. 2. In Fig. 2, the crystal structure is presented in terms of a unit lattice in the [010] direction, as viewed along the b-axis direction. Although the stoichiometric ratio in the composite oxide is represented as Ti₄Nb₁₀W₄O₄₅, the composition is equal to the formula of Ti_{0.8}Nb₂W_{0.8}O₉. The notation of the space group of the crystal structure belongs to Amma, and the space group number thereof is attributed to 63. The space group as mentioned herein corresponds to the content of Vol.A: Space-group symmetry in "International Tables for Crystallography" (2016).

Here, the space group is not limited to Amma, and can also be described by coordinate transformation by other space groups belonging to the space group number 63, such as Cmcm, Ccmm, Amam, Bbmm, and Bmmb, and are equivalent crystal structures. In Ti₄Nb₁₀W₄O₄₅, the ratio of the number of atoms A_{O} of oxygen O to the number of atoms A_{M} of the metal element M (including Ti, Nb, and W) is A_{O}/A_{M}=2.50. The orthorhombic structure 11 includes octahedra 10a composed of a metal element 18 and an oxygen element 19. The octahedra 10a are connected to each other by sharing of vertices to constitute a rhenium oxide type block (ReO₃ type block). The size of the block corresponds to 4×4=16 octahedra. The rhenium oxide type block forms a plane in the a-axis direction and the c-axis direction by sharing the edges of the octahedra 10a. A plurality of planes including the 16 octahedra 10a are connected to each other by sharing the edges of the octahedra also towards the c-axis side, thereby forming a crystal structure.

In general, the tungsten-niobium composite oxide has a crystal structure having a large tungsten composition ratio, and the crystal structure includes a block structure having a block size of 4×5=20 or 5×5=25. The titanium-niobium-tungsten composite oxide as an aspect of the first embodiment has been achieved as a result of finding by the inventors that the block structure can be reduced even in a state where the composition ratio of tungsten is high by containing titanium as a tetravalent element of low valence. The insertion amount of the lithium (Li) can be improved by reducing the block size. Since tungsten belongs to the sixth periodic element, tungsten is a heavier element as compared with the titanium element and the niobium element, and thus a material having a higher true density than that of conventional TiNb₂O₇ can be obtained. As a result, the capacity per mass can be improved.

In the active material according to the embodiment, the crystal structure of the composite oxide may be, for example, the crystal structure exemplified in Fig. 1, the crystal structure exemplified in Fig. 2, or a crystal structure in which both are mixed. The range of the composition represented by the general formula LiₐTi_{b}Nb₂W_{c}O_{2b+3c+5+δ} may be within the ranges of 0 ≤ a ≤ b + 3c + 4, 0 < b < 2, 0 < c < 2, 1.9b + 2.85c + 4.75 ≤ δ ≤ 2.1b + 3.15c + 5.25 for the subscripts in the formula. Throughout the whole of these ranges, a high-capacity active material can be obtained, and the composition may be selected according to the battery design.

In general, the tungsten element (W) and the titanium element (Ti) are elements that easily enter into the structure in the Wadsley-Roth phases in which many forms having different composition ratios exist. Therefore, the substitution of the niobium element (Nb) in the structure is easier than that of other elements. Therefore, the composition ratio in the crystal structure can be adjusted by combining the elements W, Ti, and Nb.

In the active material according to the present embodiment, a phase is obtained in a state where the monoclinic structure and the orthorhombic structure coexist in two phases. Although the composition ratio is not limited, the composition ratio can be adjusted by adjusting the uneven distribution state of the metal element. The uneven distribution state of the metal element depends on the change of the firing temperature or the valence balance of the metal element in the crystal structure.

It is considered that the mixture ratio of the monoclinic structure can be increased when the firing temperature is higher than 1100°C or when the Ti/W element ratio in the active material is adjusted to be high. It is considered that the mixture ratio of the orthorhombic structure can be increased when the firing temperature is lower than 1100°C or when the Ti/W element ratio in the active material is adjusted to be low. By increasing the mixture ratio of the orthorhombic structure, the theoretical capacity of the battery can be increased.

In the active material according to the present embodiment, the monoclinic structure and the orthorhombic structure are disposed to form domains with each other's structure in the primary particles. Between the domains of the monoclinic structure and the orthorhombic structure, 4×4=16 block structures are connected by sharing the edges, and can be formed by strong bonding without forming a defect. Therefore, it is possible to have a structure that is tough against volume expansion and contraction at the time of Li insertion and extraction and suppresses cracking in the primary particles. More preferably, it is considered that either one of the structures ideally has a single phase. When the crystal structure is different, the uneven distribution state of the metal element changes, so that the Li insertion behavior changes, and the behavior of volume expansion/contraction at the time of Li insertion/extraction changes. This is because when the structure of the active material is different in the primary particles, cracking may occur due to hysteresis when a lattice defect portion exists between the phases.

Regarding the specific ratio of the monoclinic structure and the orthorhombic structure, it is preferable to determine the mixing ratio by performing Rietveld analysis described later on both crystal structures, but as a simpler method, the mixing ratio can be estimated by ascertaining the peak position in the vicinity of 2θ=30° to 40°. Examples of peaks characteristic of the monoclinic structure in the vicinity of 2θ=30° to 40° include a peak attributed to Miller index (41-3) appearing in the range of 2θ=31.86±0.10, a peak attributed to Miller index (31-4) appearing in the range of 2θ=33.11±0.10, a peak attributed to Miller index (90-1) appearing in the range of 2θ=35.26±0.10, and a peak attributed to Miller index (107) appearing in the range of 2θ=36.51±0.10, and a peak having a clear intensity in the orthorhombic structure does not exist at these peak positions. Meanwhile, examples of peaks characteristic of the orthorhombic structure include a peak attributed to Miller index (806) appearing in the range of 2θ=31.63±0.10 and a peak attributed to Miller index (808) appearing in the range of 2θ=35.95±0.10, but a peak having a clear intensity in the monoclinic structure does not exist at these peak positions. The mixture state can be estimated by ascertaining the presence or absence of the peak and the intensity ratio thereof described above.

### <Minuscule Additive Elements>

The performance of the active material according to the embodiment can be further improved by adding an element to the composite oxide. That is, in addition to the composite oxide represented by the general formula LiₐTi_{b}Nb₂W_{c}O_{2b+3c+5+δ} and containing at least one of a monoclinic structure and an orthorhombic structure, the active material according to the embodiment may contain a minuscule amount of an additive element. Examples of the element include V, Ta, Fe, Bi, Sb, As, P, Cr, Mo, B, Na, K, Mg, Al, Ca, Y, Zr and Si.

The additive elements may be contained in the structure in a form in which some of or a portion of the constituent elements of the composite oxide are substituted. That is, the active material according to the embodiment also includes a substituted oxide based on a composite oxide containing at least one of a monoclinic structure and an orthorhombic structure and represented by the general formula LiₐTi_{b}Nb₂W_{c}O_{2b+3c+5+δ} . The additive elements may be present in the active material in a form of not being included in the crystal structure of the composite oxide.

For example, elements of vanadium (V) and phosphorus (P) can be incorporated into the crystal structure as pentavalent elements. The electron conductivity of the active material can be improved by partially substituting tetravalent titanium (Ti) elements contained as a basic constituent element by pentavalent elements. As a result, the rate performance and life performance of the active material can be enhanced. Therefore, the curve shape of the battery can be adjusted by substituting an element by V and/or P.

An element selected from vanadium (V), molybdenum (Mo), boron (B), sodium (Na), and potassium (K) can provide an effect as a sintering aid because the composite oxide has a low melting point. By adding these elements in minuscule amounts, the firing temperature can be lowered at the time of synthesizing the composite oxide to thereby improve the crystallinity. By enhancing the crystallinity, the rate performance and cycle performance of the active material can be enhanced.

Tantalum (Ta) as a pentavalent element can substitute a Nb element. Ta and Nb correspond to the same group of elements in the periodic table, and thus have similar physical and chemical properties. Therefore, even when Nb is substituted by Ta, equivalent battery performance can be obtained.

An element selected from iron (Fe), chromium (Cr), aluminum (Al), bismuth (Bi), antimony (Sb), and arsenic (As) can be incorporated into the crystal structure as a trivalent element. Magnesium (Mg) can be incorporated into the crystal structure as a divalent element. By substituting a part of the Ti elements by trivalent or divalent elements, it is possible to increase the composition ratio of a W element as a hexavalent element in order to maintain the electrical neutrality in the structure. As a result, the theoretical capacity of the battery can be increased, and the amount of Li inserted into the active material can be further increased.

Elements such as calcium (Ca), zirconium (Zr), yttrium (Y), and silicon (Si) are elements whose oxides may be stably present under firing conditions in the synthesis of the composite oxide, and that are not substituted into the crystal structure. These elements, when present in minuscule amounts, can function as a particle-growth suppressor which suppresses particle growth during firing. As a result, the shape of the particle size distribution can be adjusted, allowing for further suppression of uneven distribution in the particle size distribution.

It is desirable that the at least one element selected from the group consisting of V, Ta, Fe, Bi, Sb, As, P, Cr, Mo, B, Na, K, Mg, Al, Ca, Y, Zr, and Si is contained in a minuscule amount. Specifically, it is desirable to limit the amount of the additive element in the range of 10 ppm or more and 10,000 ppm or less in terms of mass, and is more desirable to limit the amount in the range of 3000 ppm or less in terms of mass with respect to the general formula LiₐTi_{b}Nb₂W_{c}O_{2b+3c+5+δ} . The active material according to the embodiment does not exclude a substituted composite oxide which includes a minutely substituted element incorporated into the crystal structure of the composite oxide even though the composition of the composite oxide is represented by the general formula LiₐTi_{b}Nb₂W_{c}O_{2b+3c+5+δ}. As a matter of course, a minuscule amount of additive element not incorporated into the crystal structure of the composite oxide is not presented in the above general formula, however, the active material according to the embodiment also includes a form of including the above elements in addition to the composite oxide. The active material according to the embodiment may be an unsubstituted LiₐTi_{b}Nb₂W_{c}O_{2b+3c+5+δ} composite oxide not containing the above minutely substituted elements.

### <Active Material Particles>

The active material according to the first embodiment may take the form of particles, for example. That is, the active material according to the embodiment is represented by the general formula LiₐTi_{b}Nb₂W_{c}O_{2b+3c+5+δ} (irrespective of the presence or absence of a minutely substituted element), and may be composed of composite oxide particles containing at least one of a monoclinic structure and an orthorhombic structure. The active material according to the embodiment may also be formed of particles that include the above-described elements that may be added in minuscule amounts in addition to the composite oxide. The active material may be in the form of discrete primary particles, secondary particles formed of a plurality of agglomerated primary particles, or a mixture of the primary particles and the secondary particles. The active material may contain the above elements, for example, on the surface of the primary particles of the composite oxide or between the primary particles of the composite oxide.

The average primary particle size of the active material according to the embodiment is preferably 10 um or less, more preferably 5 µm or less, and still more preferably 3 um or less. When the average primary particle size of the active material is small, the diffusion distance of lithium ions in the primary particles is short, and therefore the diffusivity of lithium ions tends to be improved. When the average primary particle size of the active material is small, the reaction area increases, so that the reactivity between the active material and lithium ions increases, and the insertion-extraction reaction of lithium ions tends to proceed.

The average secondary particle size of the active material according to the embodiment is preferably 1 um or more and 50 um or less. By setting the average secondary particle size of the active material within this range, the productivity at the time of producing an electrode can be improved, and a battery having good performance can be obtained. The average secondary particle size means a particle size at which a volume integrated value is 50% in a particle size distribution obtained by a laser diffraction particle size distribution measuring apparatus.

The BET specific surface area of the active material is desirably 3.0 m²/g or more and 120 m²/g or less, and more desirably 4.0 m²/g or more and 110 m²/g or less. When an active material having a high specific surface area is used, the discharge rate performance of the battery can be enhanced. When an active material having a low specific surface area is used, the life performance of the battery can be improved, and the coatability of a slurry containing the active material can be improved in the process of producing an electrode, which will be described later in the second embodiment.

The BET specific surface area means a specific surface area determined by a nitrogen BET (Brunauer, Emmet and Teller) method. The method for determining the specific surface area based on the nitrogen BET method will be described in detail later.

### <Production Method>

The active material according to the embodiment can be produced as follows. The production of the titanium-niobium-tungsten composite oxide is not particularly limited, but the titanium-niobium-tungsten composite oxide can be synthesized by, for example, a solid-phase reaction method, a sol-gel method, or a hydrothermal synthesis method or the like. A solid-phase reaction method and a sol-gel method will be described as examples.

### (Solid-Phase Reaction Method)

In a solid-phase reaction method, a titanium compound, a niobium compound, and a tungsten compound are used as starting materials. Examples of the titanium compound include titanium hydroxide, anatase-type titanium oxide, and rutile-type titanium oxide. Examples of the niobium compound include niobium hydroxide and niobium oxide. Examples of the tungsten compound include ammonium paratungstate and a hydrate thereof, ammonium tungstate and a hydrate thereof, tungsten hydroxide, and tungsten oxide.

When producing a substituted composite oxide in which a part of titanium, niobium, or tungsten in the crystal structure has been substituted by a minuscule amount of element described above (minuscule additive elements), an oxide of the element to be introduced as a substituted element, for example, may be included in the starting materials.

As the starting materials, for example, particulate materials are used. The average particle size of the starting materials is 5 um or less, and more preferably 2 um or less. In the solid-phase reaction method, the reaction proceeds from the contact point between the particles, and thus the reactivity can be enhanced by reducing the particle size, so that a target phase can be easily obtained.

After the starting materials are weighed at a predetermined composition ratio, the starting materials are sufficiently mixed. Mixing may be performed by either a wet method or a dry method. After the starting materials are mixed, firing is performed.

In general, the temperature at which the sublimation of the oxide containing the W element significantly proceeds is 1400 K (1127°C) or higher, and the firing temperature is preferably 1400 K or lower, but it is difficult to obtain a uniform phase by firing the present material at the above-mentioned temperature. Examples of the method for obtaining a uniform phase at a low temperature in a short time include further reducing the average particle size of the starting material compound containing the W element. In solid phase sintering, a reaction proceeds with the driving force of thermal diffusion starting from a solid joint. Here, by reducing the size of the starting material particles containing the W element having a low melting point, it is possible to increase the inter-particle bonding area during sintering since the particles pass through the liquid phase. Furthermore, as the number of contact points of the particles increases, the reaction surface increases. As a result, the surface energy is reduced, so that sintering can proceed well, and a uniform phase can be obtained while the sublimation of the W element is suppressed.

The firing may include pre-firing performed before main firing. The pre-firing is preferably performed at a firing temperature of 800°C or higher and 1100°C or lower for a firing time of 5 hours or longer and 20 hours or shorter. The solid-phase reaction can be caused to proceed in such ranges of firing temperature and firing time. By performing a reaction in advance due to inclusion of the pre-firing before the main firing, the reactivity can be enhanced.

The main firing is desirably performed at a firing temperature of 900°C or higher and 1100°C or lower, and more preferably 1000°C or higher and 1100°C or lower. The firing time is preferably 5 hours or longer and 20 hours or shorter. In such ranges of firing temperature and firing time, the solid-phase reaction can be caused to proceed and a target crystal phase can be obtained.

After cooling, the starting materials are pulverized using a pulverizer until the materials have a predetermined average particle size. When the pulverizing is performed, the crystallinity of the active material may deteriorate due to mechanical impact. In this case, it is preferable to perform anneal-firing again to restore the crystallinity. The anneal-firing is preferably performed at a firing temperature of 800°C or higher and 1000°C or lower for a firing time of 1 hour or longer and 5 hours or shorter.

### (Sol-Gel method)

In a sol-gel method, a titanium compound, a niobium compound, and a tungsten compound are used as starting materials. Examples of the titanium compound include titanium tetraisopropoxide, titanyl sulfate, titanium chloride, titanium ammonium oxalate and a hydrate thereof, and titanium hydroxide. Examples of the niobium compound include niobium chloride, niobium ammonium oxalate and a hydrate thereof, and niobium hydroxide. Examples of the tungsten compound include tungsten chloride, ammonium paratungstate and a hydrate thereof, and tungsten hydroxide.

The starting materials are preferably dissolved in pure water or an acid in advance to form a solution. By forming a solution, a dry gel in which respective elements are uniformly mixed can be obtained, so that the reactivity can be enhanced. When the starting materials cannot be dissolved in pure water, an acid is used to dissolve them.

Examples of the acid to be used to dissolve the starting materials include citric acid and oxalic acid, and oxalic acid is preferably used from the viewpoint of solubility. When oxalic acid is used, for example, the concentration is preferably set to 0.5 mol/L or more and 1 mol/L or less. The starting materials are preferably dissolved at a temperature of 70°C or higher in order to reduce the reaction time.

When dissolving of the starting materials is difficult, a dispersion liquid can be formed to proceed with the reaction. In this case, the average particle size of the starting materials contained in the dispersion liquid is favorably 3 um or less, and more preferably 1 um. After a solution (or a dispersion liquid) in which the respective compounds are adjusted to a predetermined composition ratio is prepared, neutralization using an aqueous solution of ammonia is performed while heating and stirring the solution, to adjust the pH. A gel liquid is obtained by adjusting the pH. By setting the pH to 5 or more and 8 or less, a gel uniformly containing the respective starting materials can be formed, whereby a dry gel having good reactivity during firing can be obtained.

Subsequently, the gel liquid is heated up to a temperature close to a boiling point to evaporate moisture, thereby making gelation proceed. After gelation, moisture is further evaporated to perform drying, whereby a dry gel is obtained. When performing gelation and drying, the whole solution may be concentrated by evaporation to obtain a dry gel, but a spray dryer is more preferably used because the particle size after drying can be further reduced. The average particle size of the dry gel produced by evaporating and concentrating the whole solution is preferably reduced to 10 um or less, and more preferably 5 um or less by performing pulverization before firing. Thereby, the particle size after firing can be reduced. The dry gel thus obtained is fired.

When firing the dry gel, pre-firing is performed at a temperature of 200°C or higher and 500°C or lower for a firing time of 1 hour or longer and 10 hours or shorter. Thereby, excess organic components can be eliminated, which makes it possible to enhance the reactivity during the main firing.

The main firing is preferably performed at a firing temperature of 700°C or higher and 1100°C or lower, and more preferably 700°C or higher and 1000°C or lower. The firing time is preferably 1 hour or longer and 10 hours or shorter. Since the sol-gel method is a wet method, firing can be performed at a low temperature in a short time as compared with the solid-phase reaction method. By performing firing in such a temperature range, a target phase can be obtained while suppressing the sublimation of tungsten. After firing, cooling is performed.

The powder after firing may have a high average particle size due to the formation of agglomerates. In this case, pulverizing is preferably performed to adjust a predetermined average particle size. When a minuscule amount of element described above is added to the active material containing a composite oxide synthesized by the sol-gel method, for example, an oxide of the element to be added is mixed in the powder sample obtained by pulverizing the dry gel, prior to firing. By performing firing in a state having the oxide mixed, there can be obtained an active material containing the additive elements together with the composite oxide, or an active material containing a substituted composite oxide in which the additive elements are introduced into the crystal structure of the composite oxide. When an oxide of an element which exhibits the effects as a sintering aid is added, the firing temperature can be lowered.

### <Various Measurement Methods>

Hereinafter, a method for measuring the active material will be described. Specifically, the ascertainment of the composite oxide, the measurement of the average particle size of the active material particles, and the measurement of the specific surface area of the active material will be described.

When an active material contained in an electrode of a battery is used as a sample, a pretreatment is performed by the following method to prepare a measurement sample. First, the battery is brought into a fully discharged state (state of charge: SOC 0%). Next, the battery is disassembled in a glove box under an argon atmosphere, and the electrode is taken out. Next, the taken-out electrode is washed with a solvent such as ethyl methyl carbonate. Further processing is performed for each measurement to be performed to prepare a sample in an appropriate form.

### (Ascertainment of Composite Oxide)

Ascertainment as to whether the active material according to the embodiment contains the composite oxide represented by the general formula LiₐTi_{b}Nb₂W_{c}O_{2b+3c+5+δ}, and the crystal structure is at least one of a monoclinic structure and an orthorhombic structure can be made by combining a wide-angle X-ray diffraction (XRD) method, an inductively coupled plasma (ICP) emission spectrometry, and an inert gas dissolution-infrared absorption spectroscopy. The crystal structure can be determined by the wide-angle XRD method, and the elemental composition can be determined by the ICP emission spectrometry and the inert gas dissolution-infrared absorption spectroscopy.

XRD measurement is performed as follows. First, active material particles are sufficiently pulverized to obtain a powder sample. The average particle size of the powder sample is preferably 20 um or less. The average particle size can be determined by a laser diffraction particle size distribution measuring apparatus.

Then, the powder sample is filled in a holder portion of a glass sample plate, and the surface thereof is flattened. As the glass sample plate, for example, a glass sample plate having a holder portion having a depth of 0.2 mm may be used.

Next, the glass sample plate is placed in a powder X-ray diffractometer, and an XRD spectrum is measured using Cu-Kα rays. Specific measurement conditions are, for example, as follows:
X-ray diffractometer: SmartLab manufactured by Rigaku Corporation
X-ray source: Cu-Kα rays
Output: 40 kV, 200 mA
Package measurement name: general-purpose measurement
(concentration method)
Incident parallel slit opening angle: 5°
Incident longitudinal restriction slit length: 10 mm
Light-receiving PSA: absent
Light-receiving parallel slit opening angle: 5°
Monochromatization method: Kβ filtering method
Measurement mode: continuous
Incident slit width: 0.5°
Light-receiving slit width: 20 mm
Measurement range (2θ): 5° to 70°
Sampling width (2θ): 0.01°
Scan speed: 1° to 20°/min

Thus, an XRD spectrum corresponding to the active material is obtained. In the XRD spectrum, the abscissa represents the incident angle (2θ), and the ordinate represents the diffraction intensity (cps). The scan speed may be adjusted within a range where the number of counts for the main peak of the XRD spectrum is 50,000 counts or more and 150,000 counts or less.

When an active material contained in the electrode of a battery is used as a sample, the washed electrode obtained by performing the above pretreatment is cut to about the same area as the area of the holder of the glass sample plate, to thereby obtain a measurement sample.

Next, the obtained measurement sample is directly attached to the glass holder, and XRD measurement is performed. Subsequently, measurement is performed using XRD for the materials other than the active material that may be contained in the electrode, such as a current collector, a conductive agent, and a binder, thereby ascertaining an XRD pattern derived from those materials. Next, when there are overlapping peaks between a peak considered to be derived from the active material and the peaks of the other materials in the measurement sample, the peaks of the materials other than the active material are separated. Thus, an XRD spectrum corresponding to the active material is obtained.

A Rietveld method is used to ascertain whether the crystal structure of the sample measured belongs to any one of the monoclinic structure and the orthorhombic structure described above. The ascertainment can be made by ascertaining that a value R_{wp} as a reliability factor is at least 20% or less, and more preferably 15% or less using, for example, RIETAN-FP as an analysis program. At this time, when there is a peak including impurities and the peak overlaps a phase to be analyzed, the analysis precision may be deteriorated.

In this case, analysis is preferably performed excluding a portion that clearly overlaps the impurities-derived peak from the analysis range. This is not always the case, however, because the intensity ratio varies when a material other than the active material according to the embodiment is contained in the sample, when the orientation of the sample is significantly high, or when coarse particles are mixed. Therefore, the structure is determined by ascertaining that there is no contradiction in the position or relative intensity of all the peaks attributed to the crystal structure. When the spectrum intensity is low and the background intensity is low, the value R_{wp} may be small. The reliability factor does not have meaning in its absolute value, but has meaning in relatively determining the goodness of fitting under certain measurement conditions.

RIETAN-FP is a program for Rietveld analysis available (at least in August 2023) for free on the Internet at the webpage (https://jp-minerals.org/rietan/).

In regard to the content of the respective elements of the active material particles contained in the sample, with respect to that of metal elements, the content can be ascertained by the ICP emission spectrometry. With respect to that of the oxygen element, the content can be quantified by a method such as inert gas dissolution-infrared absorption spectroscopy, but precise quantification is difficult to perform.

For active material particles contained in the electrode, after performing the above-described pretreatment, the following treatment is further performed. After washing the electrode, a member containing an active material (for example, the active material-containing layer described in the second embodiment) is peeled off from the current collector of the electrode, for example. The portion peeled off from the electrode is heated for a short period of time in air (at 500°C for about 1 hour), to burn off unnecessary portions such as a binder and a conductive agent. Thereafter, the ICP emission analysis or the like can be performed to quantify the contents of the respective elements.

### (Measurement of Average Particle Size)

The average primary particle size of the active material can be determined by observation using a scanning electron microscope (SEM). Specifically, the average primary particle size provided by the SEM observation can be calculated by the following method.

First, in a primary particle of a SEM image obtained by the SEM observation, the length of the longest axis portion and the length of the shortest axis portion are measured, and the arithmetic mean value of these lengths is taken as the primary particle size. The primary particle size is measured for 100 optionally selected particles, and the average value thereof is taken as the average primary particle size.

The average secondary particle size of the active material can be determined from a particle size distribution measured using a laser diffraction particle size distribution measuring apparatus. As a sample for performing the particle size distribution measurement, used is a dispersion liquid, which is obtained by diluting the active material with N-methyl-2-pyrrolidone such that the concentration of the active material is 0.1% by mass to 1% by mass. The particle size at which a cumulative volume value is 50% in the obtained particle size distribution is taken as the average secondary particle size.

### (Measurement of BET Specific Surface Area)

The BET specific surface area for the active material particles can be determined by the following method.

First, 4 g of the active material is collected as a sample. Next, an evaluation cell of a measuring apparatus is dried under reduced pressure at a temperature of 100°C or higher for 15 hours to perform degassing. As the evaluation cell, for example, a 1/2 inch cell can be used. Next, the sample is placed in the measuring apparatus. As the measuring apparatus, for example, TriStar II 3020 manufactured by Shimadzu-Micromeritics Instrument can be used. Then, in a nitrogen gas at 77K (the boiling point of nitrogen), while gradually increasing a pressure P (mmHg) of the nitrogen gas, the nitrogen gas adsorption amount (mL/g) of the sample is measured for each pressure P. Next, a value obtained by dividing the pressure P (mmHg) by a saturated vapor pressure P₀ (mmHg) of the nitrogen gas is taken as a relative pressure P/P₀, and a nitrogen gas adsorption amount corresponding to each relative pressure P/P₀ is plotted, thereby obtaining an adsorption isotherm. Then, a BET plot is calculated from the nitrogen adsorption isotherm and the BET equation, and the specific surface area is obtained using the BET plot. The BET plot is calculated by the BET multipoint method.

### (Cs-STEM Image Observation Method)

The structures in Figs. 1 and 2 can also be ascertained by directly observing the microstructure. The observation can be carried out in a high angle annular dark-field (HAADF) observation using a scanning transmission electron microscope (STEM) method. From the viewpoint of improving measurement resolution, spherical aberration correction is preferably used. By acquiring an atomic image (10 nm × 10 nm) from a direction perpendicular to an ReO₃ type block (a direction viewed from a b-axis in Figs. 1 and 2) and ascertaining the positional relationship of metal elements constituting the ReO₃ block, a structure thereof can be ascertained.

The active material according to the first embodiment contains a composite oxide represented by the general formula LiₐTi_{b}Nb₂W_{c}O_{2b+3c+5+δ} and satisfying 0 ≤ a ≤ b + 3c + 4, 0 < b < 2, 0 < c < 2, 1.9b + 2.85c + 4.75 ≤ δ ≤ 2.1b + 3.15c + 5.25, wherein a crystal structure of the composite oxide is at least one of a monoclinic structure and an orthorhombic structure. With such a configuration, the electrode using the composite oxide as the electrode active material has a high capacity per mass. The secondary battery and battery pack using the above composite oxide as the electrode active material have a high capacity per mass. That is, the active material according to the embodiment exhibits a high capacity.

### [Second Embodiment]

According to a second embodiment, an electrode is provided. The electrode according to the second embodiment contains the active material according to the first embodiment. The electrode may be a battery electrode containing the active material according to the first embodiment as a battery active material. The electrode as the battery electrode may be, for example, a negative electrode containing the active material according to the first embodiment as a negative electrode active material. Alternatively, the electrode may be a positive electrode containing the active material according to the first embodiment as a positive electrode active material.

The electrode according to the second embodiment may include a current collector and an active material-containing layer. The active material-containing layer may be formed on one surface or both surfaces of the current collector. The active material-containing layer can contain an active material, and optionally a conductive agent and a binder.

The active material-containing layer may singly contain the active material according to the first embodiment, or may contain two or more kinds of the active material according to the first embodiment. Furthermore, a mixture obtained by mixing one kind or two or more kinds of the active material according to the first embodiment with one kind or two or more kinds of other active material may be contained. It is desirable that the content ratio of the active material according to the first embodiment to the total mass of the active material according to the first embodiment and the other active material is 10% by mass or more and 100% by mass or less.

For example, when the active material according to the first embodiment is contained as the negative electrode active material, examples of other active materials include lithium titanate having a ramsdellite structure (for example, Li₂₊ₓTi₃O₇, 0 ≤ x ≤ 3), lithium titanate having a spinel structure (for example, Li₄₊ₓTi₅O₁₂, 0 ≤ x ≤ 3), monoclinic titanium dioxide (TiO₂), anatase titanium dioxide, rutile titanium dioxide, hollandite titanium composite oxide, orthorhombic titanium-containing composite oxide, monoclinic niobium titanium composite oxide, niobium oxide, niobium titanium oxide, niobium molybdenum composite oxide, and niobium tungsten composite oxide.

Examples of the orthorhombic titanium-containing composite oxide include a compound represented by Li₂₊ₑM2_{2-f}Ti_{6-g}M3hO_{14+σ}. Here, M2 is at least one selected from the group consisting of Sr, Ba, Ca, Mg, Na, Cs, Rb and K. M3 is at least one selected from the group consisting of Zr, Sn, V, Nb, Ta, Mo, W, Y, Fe, Co, Cr, Mn, Ni and Al. The respective subscripts in the composition formula are specified as follows: 0 ≤ e ≤ 6, 0 ≤ f < 2, 0 ≤ g < 6, 0 ≤ h < 6, and -0.5 ≤ σ ≤ 0.5. Specific examples of the orthorhombic titanium-containing composite oxide include Li₂₊ₑNa₂Ti₆O₁₄ (0 ≤ e ≤ 6) .

Examples of the monoclinic niobium titanium composite oxide include a compound represented by LiₓTi_{1-y}M4_{y}Nb_{2-z}M5_{z}O_{7+δ}. Here, M4 is at least one selected from the group consisting of Zr, Si, and Sn. M5 is at least one selected from the group consisting of V, Ta, and Bi. The respective subscripts in the composition formula are specified as follows: 0 ≤ x ≤ 5, 0 ≤ y < 1, 0 ≤ z < 2, and -0.3 ≤ δ ≤ 0.3. Specific examples of the monoclinic niobium titanium composite oxide include LiₓNb₂TiO₇ (0 ≤ x ≤ 5) .

Other examples of the monoclinic niobium titanium composite oxide include a compound represented by LiₓTi_{1-y}M6_{y+z}Nb_{2-z}O_{7-δ}. Here, M6 is at least one selected from the group consisting of Mg, Fe, Ni, Co, W, Ta, and Mo. The respective subscripts in the composition formula are specified as follows: 0 ≤ x < 5, 0 ≤ y < 1, 0 ≤ z < 2, and -0.3 ≤ δ ≤ 0.3.

The conductive agent is blended in order to enhance current collection performance and suppress contact resistance between the active material and the current collector. Examples of the conductive agent include carbonaceous substances such as vapor grown carbon fiber (VGCF), carbon blacks such as acetylene black, graphite, carbon nanotubes, and carbon nanofibers. One of them may be used as the conductive agent, or two or more of them may be used in combination as the conductive agent. Alternatively, instead of using the conductive agent, carbon coating or electro-conductive inorganic material coating may be applied to the surface of the active material particle. In addition, the current collection performance of the active material-containing layer may also be improved by coating carbon or a conductive material onto the surface of the active material together with using the conductive agent.

The binder is blended to fill gaps of the dispersed active material and to bind the active material with the current collector. Examples of the binder include polytetrafluoroethylene (PTFE), polyvinylidene fluoride (PVdF), fluorine rubber, styrene-butadiene rubber, polyacrylate compounds, imide compounds, carboxymethyl cellulose (CMC), and salts of CMC. One of them may be used as the binder, or two or more of them may be used in combination as the binder.

The blending proportion of the active material, conductive agent and binder in the active material-containing layer may be appropriately changed according to the application of the electrode. For example, when the electrode is used as the negative electrode of the secondary battery, it is preferable to blend the active material (negative electrode active material), the conductive agent, and the binder in proportions of 68% by mass or more and 96% by mass or less, 2% by mass or more and 30% by mass or less, and 2% by mass or more and 30% by mass or less, respectively. When the amount of the conductive agent is 2% by mass or more, the current collection performance of the active material-containing layer can be improved. When the amount of the binder is 2% by mass or more, the binding property between the active material-containing layer and the current collector is sufficient, and excellent cycle performance can be expected. Meanwhile, the amount of each of the conductive agent and the binder is preferably 30% by mass or less in order to increase the capacity.

When the surface of the active material is coated with carbon or a conductive material, the amount of the coating material can be regarded as being included in the amount of the conductive agent. The coating amount with the carbon or the conductive material is preferably 0.5% by mass or more and 5% by mass or less. When the coating amount is in this range, the current collection performance and the electrode density can be enhanced.

As the current collector, a material that is electrochemically stable at a potential at which lithium (Li) is inserted into and extracted from the active material is used. For example, when the active material is used as the negative electrode active material, the current collector is preferably made of copper, nickel, stainless steel, or aluminum, or an aluminum alloy containing one or more elements selected from the group consisting of Mg, Ti, Zn, Mn, Fe, Cu, and Si. The thickness of the current collector is preferably 5 um or more and 20 um or less. The current collector having such a thickness can balance the strength and weight reduction of the electrode.

The current collector may include a portion where the active material-containing layer is not formed on the surface thereof. This portion may serve as a current collecting tab.

The electrode can be produced, for example, by the following method. First, the active material, the conductive agent, and the binder are suspended in a solvent to prepare a slurry. The slurry is applied onto one surface or both surfaces of the current collector. Next, the applied slurry is dried to obtain a layered stack of the active material-containing layer and the current collector. Thereafter, the layered stack is pressed. The electrode is produced in this manner.

Alternatively, the electrode may be produced by the following method. First, an active material, a conductive agent, and a binder are mixed to obtain a mixture. Then, the mixture is formed into pellets. Then, the electrode can be obtained by disposing the pellets on the current collector.

The electrode according to the second embodiment contains the active material according to the first embodiment. Therefore, the electrode according to the second embodiment can achieve a secondary battery having a high capacity per mass.

### [Third Embodiment]

According to a third embodiment, provided is a secondary battery including a negative electrode, a positive electrode, and an electrolyte. The secondary battery includes the electrode according to the second embodiment as the negative electrode, the positive electrode, or both the negative electrode and the positive electrode. That is, the secondary battery according to the third embodiment includes an electrode containing the active material according to the first embodiment as a battery active material, as a battery electrode. A desirable aspect of the secondary battery includes the electrode according to the second embodiment as the negative electrode. That is, the desirable aspect of the secondary battery includes the electrode containing the active material according to the first embodiment as the battery active material, as the negative electrode. Hereinafter, the desirable aspect will be described.

The secondary battery according to the third embodiment may further include a separator disposed between the positive electrode and the negative electrode. The negative electrode, the positive electrode, and the separator may constitute an electrode group. The electrolyte may be held in the electrode group.

The secondary battery according to the third embodiment may further include an exterior member that houses the electrode group and the electrolyte.

Furthermore, the secondary battery according to the third embodiment may further include a negative electrode terminal electrically connected to the negative electrode and a positive electrode terminal electrically connected to the positive electrode.

The secondary battery according to the third embodiment may be, for example, a lithium secondary battery. The secondary battery includes a nonaqueous electrolyte secondary battery containing a nonaqueous electrolyte.

Hereinafter, the negative electrode, the positive electrode, the electrolyte, the separator, the exterior member, the negative electrode terminal, and the positive electrode terminal will be described in detail.

### 1) Negative Electrode

The negative electrode may include a negative electrode current collector and a negative electrode active material-containing layer. The negative electrode current collector and the negative electrode active material-containing layer may be the current collector and the active material-containing layer that can be included in the electrode according to the second embodiment, respectively. The negative electrode active material-containing layer contains the active material according to the first embodiment as a negative electrode active material.

Of the details of the negative electrode, portions overlapping the details described in the second embodiment will be omitted.

The density of the negative electrode active material-containing layer (excluding the current collector) is preferably 1.8 g/cm³ or more and 2.8 g/cm³ or less. The negative electrode in which the density of the negative electrode active material-containing layer is within this range is excellent in energy density and electrolyte retention ability. The density of the negative electrode active material-containing layer is more preferably 2.1 g/cm³ or more and 2.6 g/cm³ or less.

The negative electrode may, for example, be produced by the same method as that in the electrode according to the second embodiment.

### 2) Positive Electrode

The positive electrode may include a positive electrode current collector and a positive electrode active material-containing layer. The positive electrode active material-containing layer may be formed on one surface or both surfaces of the positive electrode current collector. The positive electrode active material-containing layer may contain a positive electrode active material, and optionally a conductive agent and a binder.

As the positive electrode active material, for example, an oxide or a sulfide may be used. The positive electrode may singly contain one kind of compound as the positive electrode active material, or contain two or more kinds of compounds in combination. Examples of the oxides and sulfides include compounds capable of having Li and Li ions be inserted and extracted. Depending on the target battery, the active material of the first embodiment may be contained.

Examples of such a compound include manganese dioxide (MnO₂), iron oxides, copper oxides, nickel oxides, lithium manganese composite oxides (for example, LiₓMn₂O₄ or LiₓMnO₂; 0 < x ≤ 1), lithium nickel composite oxides (for example, LiₓNiO₂; 0 < x ≤ 1), lithium cobalt composite oxides (for example, LiₓCoO₂; 0 < x ≤ 1), lithium nickel cobalt composite oxides (for example, LiₓNi_{1-y}Co_{y}O₂; 0 < x ≤ 1, 0 < y < 1), lithium manganese cobalt composite oxides (for example, LiₓMn_{y}Co_{1-y}O₂; 0 < x ≤ 1, 0 < y < 1), lithium manganese nickel composite oxides having a spinel structure (for example, LiₓMn_{2-y}Ni_{y}O₄; 0 < x ≤ 1, 0 < y < 2), lithium phosphates having an olivine structure (for example, LiₓFePO₄; 0 < x ≤ 1, LiₓFe_{1-y}Mn_{y}PO₄; 0 < x ≤ 1, 0 < y ≤ 1, LiₓCoPO₄; 0 < x ≤ 1), iron sulfate (Fe₂(SO₄)₃), vanadium oxides (for example, V₂O₅), and lithium nickel cobalt manganese composite oxides (LiₓNi_{1-y-z}Co_{y}Mn_{z}O₂; 0 < x ≤ 1, 0 < y < 1, 0 < z < 1, y + z < 1).

Among the above, examples of compounds more preferable as the positive electrode active material include lithium manganese composite oxides having a spinel structure (for example, LiₓMn₂O₄; 0 < x ≤ 1), lithium nickel composite oxides (for example, LiₓNiO₂; 0 < x ≤ 1), lithium cobalt composite oxides (for example, LiₓCoO₂; 0 < x ≤ 1), lithium nickel cobalt composite oxides (for example, LiₓNi_{1-y}Co_{y}O₂; 0 < x ≤ 1, 0 < y < 1), lithium manganese nickel composite oxides having a spinel structure (for example, LiₓMn_{2-y}Ni_{y}O₄; 0 < x ≤ 1, 0 < y < 2), lithium manganese cobalt composite oxides (for example, LiₓMn_{y}Co_{1-y}O₂; 0 < x ≤ 1, 0 < y < 1), lithium iron phosphates (for example, LiₓFePO₄; 0 < x ≤ 1), and lithium nickel cobalt manganese composite oxide (LiₓNi_{1-y-z}Co_{y}Mn_{z}O₂; 0 < x ≤ 1, 0 < y < 1, 0 < z < 1, y + z < 1) . When these compounds are used for the positive electrode active material, the positive electrode potential can be increased.

When an ambient temperature molten salt is used as the electrolyte of the battery, it is preferable to use a positive electrode active material containing lithium iron phosphate, LiₓVPO₄F (0 ≤ x ≤ 1), lithium manganese composite oxide, lithium nickel composite oxide, lithium nickel cobalt composite oxide, or a mixture thereof. Since these compounds have low reactivity with ambient temperature molten salts, cycle life can be improved. Details of the ambient temperature molten salt will be described later.

The primary particle size of the positive electrode active material is preferably 100 nm or more and 1 um or less. The positive electrode active material having a primary particle size of 100 nm or more is easy to handle during industrial production. In the positive electrode active material having a primary particle size of 1 um or less, in-solid diffusion of lithium ions can proceed smoothly.

The specific surface area of the positive electrode active material is preferably 0.1 m²/g or more and 10 m²/g or less. The positive electrode active material having a specific surface area of 0.1m²/g or more can sufficiently secure sites for inserting and extracting Li ions. The positive electrode active material having a specific surface area of 10 m²/g or less is easy to handle during industrial production, and can secure good charge-discharge cycle performance.

The binder is blended to fill gaps among the dispersed positive electrode active material and also to bind the positive electrode active material with the positive electrode current collector. Examples of the binder include polytetrafluoro ethylene (PTFE), polyvinylidene fluoride (PVdF), fluororubber, polyacrylate compounds, imide compounds, carboxymethyl cellulose (CMC), and salts of CMC. One of them may be used as the binder, or two or more of them may be used in combination as the binder.

The conductive agent is blended to improve current collection performance and to suppress the contact resistance between the positive electrode active material and the positive electrode current collector. Examples of the conductive agent include carbonaceous substances such as vapor grown carbon fiber (VGCF), carbon black such as acetylene black, and graphite. One of them may be used as the conductive agent, or two or more of them may be used in combination as the conductive agent. The conductive agent may be omitted.

In the positive electrode active material-containing layer, the positive electrode active material and the binder are preferably blended in proportions of 80% by mass or more and 98% by mass or less and 2% by mass or more and 20% by mass or less, respectively.

When the amount of the binder is 2% by mass or more, sufficient electrode strength can be obtained. The binder can function as an insulator. Therefore, when the amount of the binder is 20% by mass or less, the amount of the insulator contained in the electrode is reduced, so that the internal resistance can be reduced.

When the conductive agent is added, the positive electrode active material, the binder, and the conductive agent are preferably blended in proportions of 77% by mass or more and 95% by mass or less, 2% by mass or more and 20% by mass or less, and 3% by mass or more and 15% by mass or less, respectively.

When the amount of the conductive agent is 3% by mass or more, the above-described effects can be exhibited. By setting the amount of the conductive agent to 15% by mass or less, the proportion of the conductive agent that contacts the electrolyte can be reduced. When this proportion is low, the decomposition of the electrolyte can be reduced during storage under high temperatures.

The positive electrode current collector is preferably an aluminum foil, or an aluminum alloy foil containing one or more elements selected from the group consisting of Mg, Ti, Zn, Ni, Cr, Mn, Fe, Cu, and Si.

The thickness of the aluminum foil or aluminum alloy foil is preferably 5 um or more and 20 um or less, and more preferably 15 um or less. The purity of the aluminum foil is preferably 99% by mass or more. The amount of a transition metal such as iron, copper, nickel, or chromium contained in the aluminum foil or the aluminum alloy foil is preferably 1% by mass or less.

The positive electrode current collector may include a portion where a positive electrode active material-containing layer is not formed on the surface of thereof. This portion may serve as a positive electrode current collecting tab.

The positive electrode may be produced by a method similar to that for the electrode according to the second embodiment, for example, using the positive electrode active material.

### 3) Electrolyte

As the electrolyte, for example, a liquid nonaqueous electrolyte or a gel nonaqueous electrolyte may be used. The liquid nonaqueous electrolyte is prepared by dissolving an electrolyte salt as a solute in an organic solvent. The concentration of the electrolyte salt is preferably 0.5 mol/L or more and 2.5 mol/L or less.

Examples of the electrolyte salt include lithium salts such as lithium perchlorate (LiClO₄), lithium hexafluorophosphate (LiPF₆), lithium tetrafluoroborate (LiBF₄), lithium hexafluoroarsenate (LiAsF₆), lithium trifluoromethanesulfonate (LiCF₃SO₃), lithium bistrifluoromethylsulfonylimide (LiN(CF₃SO₂)₂), and lithium bis (fluorosulfonyl)imide(LiN(SO₂F)₂; LiFSI), and mixtures thereof. The electrolyte salt is preferably resistant to oxidation even at a high potential, and most preferably LiPF₆.

Examples of the organic solvent include cyclic carbonates such as propylene carbonate (PC), ethylene carbonate (EC), and vinylene carbonate (VC); linear carbonates such as diethyl carbonate (DEC), dimethyl carbonate (DMC), and methyl ethyl carbonate (MEC); cyclic ethers such as tetrahydrofuran (THF), 2-methyl tetrahydrofuran (2MeTHF), and dioxolane (DOX); linear ethers such as dimethoxy ethane (DME) and diethoxy ethane (DEE); γ-butyrolactone (GBL), acetonitrile (AN), and sulfolane (SL). These organic solvents may be used singly or as a mixed solvent.

The gel nonaqueous electrolyte is prepared by obtaining a composite of a liquid nonaqueous electrolyte and a polymeric material. Examples of the polymeric material include polyvinylidene fluoride (PVdF), polyacrylonitrile (PAN), polyethylene oxide (PEO), and mixtures thereof.

Alternatively, other than the liquid nonaqueous electrolyte and the gel nonaqueous electrolyte, an ambient temperature molten salt (ionic melt) containing lithium ions, a polymer solid electrolyte, and an inorganic solid electrolyte and the like may be used as the nonaqueous electrolyte.

The ambient temperature molten salt (ionic melt) indicates compounds among organic salts made of combinations of organic cations and anions, which are able to exist in a liquid state at ambient temperature (15°C or higher and 25°C or lower). The ambient temperature molten salt includes an ambient temperature molten salt which exists alone as a liquid, an ambient temperature molten salt which becomes a liquid upon mixing with an electrolyte salt, an ambient temperature molten salt which becomes a liquid when dissolved in an organic solvent, or mixtures thereof. In general, the melting point of the ambient temperature molten salt used in secondary batteries is 25°C or lower. The organic cations generally have a quaternary ammonium framework.

The polymer solid electrolyte is prepared by dissolving the electrolyte salt in a polymeric material, and solidifying it.

The inorganic solid electrolyte is a solid substance having Li ion conductivity.

Alternatively, in place of the nonaqueous electrolyte, a liquid aqueous electrolyte or a gel aqueous electrolyte may be used as the electrolyte. The liquid aqueous electrolyte is prepared by dissolving, for example, the above electrolyte salt as a solute in an aqueous solvent. The gel aqueous electrolyte is prepared by obtaining a composite of a liquid aqueous electrolyte and the above polymeric material. As the aqueous solvent, a solution containing water may be used. The solution containing water may be pure water, or may be a mixed solution of water with an organic solvent.

### 4) Separator

The separator is made of, for example, a porous film or synthetic resin nonwoven fabric containing polyethylene (PE), polypropylene (PP), cellulose, or polyvinylidene fluoride (PVdF). From the viewpoint of safety, it is preferable to use a porous film made of polyethylene or polypropylene. This is because at a certain temperature, these porous films melt and can thereby shut off the current.

### 5) Exterior Member

As the exterior member, for example, a container made of a laminate film or a metal container may be used. The thickness of the laminate film is, for example, 0.5 mm or less, and preferably 0.2 mm or less.

As the laminate film, a multilayer film including a plurality of resin layers and a metal layer interposed between the resin layers is used. The resin layer contains, for example, a polymeric material such as polypropylene (PP), polyethylene (PE), nylon, or polyethylene terephthalate (PET) . The metal layer is preferably composed of an aluminum foil or an aluminum alloy foil for weight reduction. The laminate film can be formed into the shape of the exterior member by performing sealing by thermal fusion.

The wall thickness of the metal container is, for example, 1 mm or less, more preferably 0.5 mm or less, and still more preferably 0.2 mm or less.

The metal container is made, for example, of aluminum or an aluminum alloy or the like. The aluminum alloy preferably contains elements such as magnesium, zinc, and silicon. When the aluminum alloy contains transition metals such as iron, copper, nickel, and chromium, the content thereof is preferably 1% by mass or less.

The shape of the exterior member is not particularly limited. The shape of the exterior member may be, for example, a flat shape (thin shape), a square shape, a cylindrical shape, a coin shape, or a button shape or the like. The exterior member can be appropriately selected according to the size of the battery and the application of the battery.

### 6) Negative Electrode Terminal

The negative electrode terminal may be made of a material that is electrochemically stable at the Li insertion-extraction potential of the negative electrode active materials mentioned above, and has electrical conductivity. Specific examples of the material for the negative electrode terminal include copper, nickel, stainless steel, or aluminum, or an aluminum alloy containing at least one element selected from the group consisting of Mg, Ti, Zn, Mn, Fe, Cu, and Si. Aluminum or an aluminum alloy is preferably used as the material for the negative electrode terminal. The negative electrode terminal is preferably made of the same material as the negative electrode current collector in order to reduce contact resistance between the negative electrode terminal and the negative electrode current collector.

### 7) Positive Electrode Terminal

The positive electrode terminal may be made of a material that is electrically stable in the potential range of 3 V or more and 4.5 V or less (vs. Li/Li+) with respect to the oxidation-reduction potential of lithium, and has electrical conductivity. Examples of the material for the positive electrode terminal include aluminum or an aluminum alloy containing at least one element selected from the group consisting of Mg, Ti, Zn, Mn, Fe, Cu, and Si. The positive electrode terminal is preferably made of the same material as that of the positive electrode current collector in order to reduce contact resistance between the positive electrode terminal and the positive electrode current collector.

The aspect including the electrode according to the second embodiment as the negative electrode has been described above. Of the aspects of the secondary battery according to the third embodiment, in an aspect including the electrode according to the second embodiment as the positive electrode, as the negative electrode that is the counter electrode thereto, for example, the following counter electrode may be used. At least one electrode selected from lithium metal, a lithium metal alloy, graphite, silicon, silicon oxide, tin oxide, tin, and other alloys may be used as the negative electrode. A material containing no Li in the active material may be used as a negative electrode by pre-doping the Li element.

In the aspect including the electrode according to the second embodiment as the positive electrode, details of the positive electrode overlap those described in the second embodiment, and are therefore omitted.

Next, a secondary battery according to a third embodiment will be more specifically described with reference to the drawings.

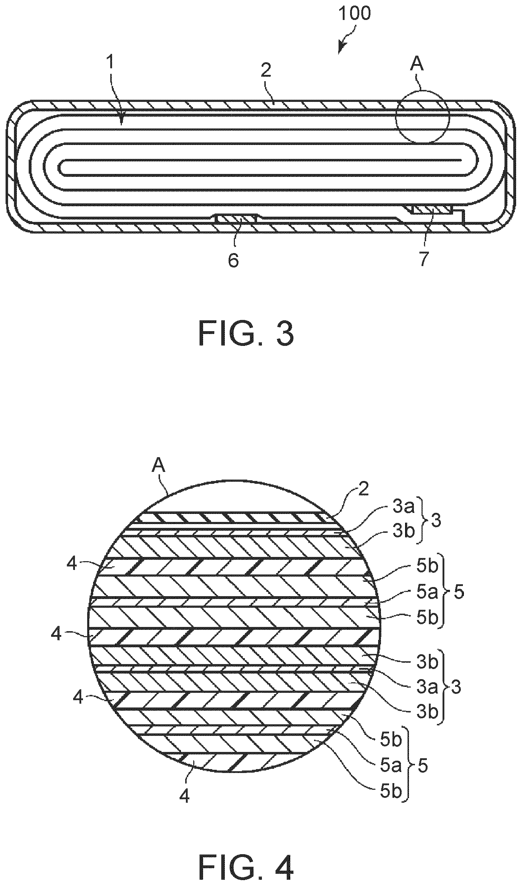

Fig. 3 is a cross-sectional view schematically showing an example of the secondary battery according to the third embodiment. Fig. 4 is an enlarged cross-sectional view of a part A of the secondary battery shown in Fig. 3.

A secondary battery 100 shown in Figs. 3 and 4 includes an electrode group 1 shown in Fig. 4, a bag-shaped exterior member 2 shown in Figs. 3 and 4, and an electrolyte, which is not shown. The electrode group 1 and the electrolyte are housed in the bag-shaped exterior member 2. The electrolyte (not shown) is held in the electrode group 1.

The bag-shaped exterior member 2 is made of a laminate film including two resin layers and a metal layer interposed between the resin layers.

As shown in Fig. 3, the electrode group 1 is a flat wound electrode group. As shown in Fig. 4, the flat wound electrode group 1 includes a negative electrode 3, a separator 4, and a positive electrode 5. The separator 4 is interposed between the negative electrode 3 and the positive electrode 5.

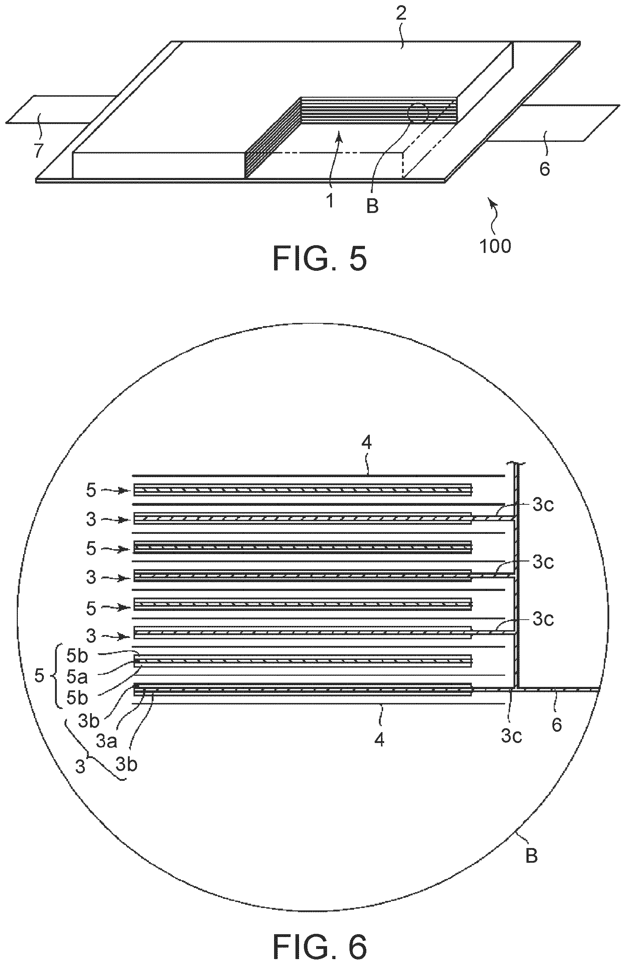

The negative electrode 3 includes a negative electrode current collector 3a and a negative electrode active material-containing layer 3b. In the portion of the negative electrode 3 positioned outermost among the wound electrode group 1, as shown in Fig. 5, the negative electrode active material-containing layer 3b is formed only on the inner surface side of the negative electrode current collector 3a. In the other portions of the negative electrode 3, the negative electrode active material-containing layers 3b are formed on both the surfaces of the negative electrode current collector 3a.

The positive electrode 5 includes a positive electrode current collector 5a and positive electrode active material-containing layers 5b formed on both the surfaces of the positive electrode current collector 5a.

As shown in Fig. 3, a negative electrode terminal 6 and a positive electrode terminal 7 are positioned in vicinity of the outer peripheral end of the wound electrode group 1. The negative electrode terminal 6 is connected to a portion of the negative electrode current collector 3a positioned outermost. The positive electrode terminal 7 is connected to a portion of the positive electrode current collector 5a positioned outermost. The negative electrode terminal 6 and the positive electrode terminal 7 extend to the outside from the opening of the bag-shaped exterior member 2. A thermoplastic resin layer is provided on the inner surface of the bag-shaped exterior member 2, and the opening is sealed by heat-sealing the resin layer.

The secondary battery according to the third embodiment is not limited to the secondary battery having the structure shown in Figs. 3 and 4, and may be, for example, a battery having a structure shown in Figs. 5 and 6.

Fig. 5 is a partially cut-out perspective view schematically showing another example of the secondary battery according to the third embodiment. Fig. 6 is an enlarged cross-sectional view of a part B of the secondary battery shown in Fig. 5.

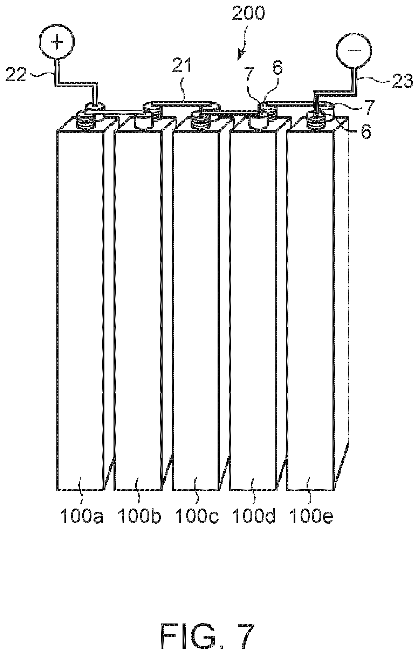

A secondary battery 100 shown in Figs. 6 and 7 includes an electrode group 1 shown in Figs. 6 and 7, an exterior member 2 shown in Fig. 6, and an electrolyte (not shown). The electrode group 1 and the electrolyte are housed in the exterior member 2. The electrolyte is held in the electrode group 1.

The exterior member 2 is made of a laminate film including two resin layers and a metal layer interposed between the resin layers.

As shown in Fig. 6, the electrode group 1 is a stacked electrode group. The stacked electrode group 1 has a structure in which negative electrodes 3 and positive electrodes 5 are alternately stacked with separators 4 interposed therebetween.

The electrode group 1 includes a plurality of negative electrodes 3. Each of the plurality of negative electrodes 3 includes a negative electrode current collector 3a and negative electrode active material-containing layers 3b supported on both the surfaces of the negative electrode current collector 3a. The electrode group 1 includes a plurality of positive electrodes 5. Each of the plurality of positive electrodes 5 includes a positive electrode current collector 5a and positive electrode active material-containing layers 5b supported on both the surfaces of the positive electrode current collector 5a.

The negative electrode current collector 3a of each of the negative electrodes 3 includes, on one side thereof, a portion 3c where the negative electrode active material-containing layer 3b is not supported on any surface. This portion 3c serves as a negative electrode current collecting tab. As shown in Fig. 6, the portions 3c serving as the negative electrode current collecting tabs do not overlap the positive electrodes 5. The plurality of negative electrode current collecting tabs (portions 3c) are electrically connected to the strip-shaped negative electrode terminal 6. The tip of the strip-shaped negative electrode terminal 6 is drawn out of the exterior member 2.

Although not shown, the positive electrode current collector 5a of each of the positive electrodes 5 includes on one side thereof, a portion where the positive electrode active material-containing layer 5b is not supported on any surface. This portion serves as a positive electrode current collecting tab. Like the negative electrode current collecting tabs (portion 3c), the positive electrode current collecting tabs do not overlap the negative electrodes 3. The positive electrode current collecting tabs are located on the opposite side of the electrode group 1 with respect to the negative electrode current collecting tabs (portion 3c). The positive electrode current collecting tabs are electrically connected to the strip-shaped positive electrode terminal 7. The tip of the strip-shaped positive electrode terminal 7 is located on the side opposite to the negative electrode terminal 6 and is drawn out of the exterior member 2.

The secondary battery according to the third embodiment includes the electrode according to the second embodiment. That is, the secondary battery according to the third embodiment includes an electrode containing the active material according to the first embodiment. Therefore, the secondary battery according to the third embodiment has a high capacity per mass.

### [Fourth Embodiment]

According to a fourth embodiment, a battery module is provided. The battery module according to the fourth embodiment includes a plurality of secondary batteries according to the third embodiment.

In the battery module according to the fourth embodiment, the single-batteries may be arranged to be electrically connected in series or in parallel, or may be arranged in combination of in-series connection and in-parallel connection.

Next, an example of the battery module according to the fourth embodiment will be described with reference to the drawings.

Fig. 7 is a perspective view schematically showing an example of the battery module according to the fourth embodiment. A battery module 200 shown in Fig. 7 includes five single-batteries 100a to 100e, four bus bars 21, a positive electrode side lead 22, and a negative electrode side lead 23. Each of the five single-batteries 100a to 100e is the secondary battery according to the third embodiment.

The bus bar 21 connects, for example, a negative electrode terminal 6 of one single-battery 100a and a positive electrode terminal 7 of the single-battery 100b positioned adjacent. In such a manner, the five single-batteries 100 are connected in series by the four bus bars 21. That is, the battery module 200 of Fig. 7 is a battery module of five-in-series connection. Although an example is not illustrated, in a battery module including a plurality of single-batteries electrically connected in parallel, for example, the plurality of single-batteries may be electrically connected by connecting a plurality of negative electrode terminals to each other via bus bars and connecting a plurality of positive electrode terminals to each other via bus bars.

The positive electrode terminal 7 of at least one battery of the five single-batteries 100a to 100e is electrically connected to the positive electrode side lead 22 for external connection. The negative electrode terminal 6 of at least one battery of the five single-batteries 100a to 100e is electrically connected to the negative electrode side lead 23 for external connection.

The battery module according to the fourth embodiment includes the secondary battery according to the third embodiment. Therefore, the battery module according to the embodiment has a high capacity per mass.

### [Fifth Embodiment]

According to a fifth embodiment, a battery pack is provided. The battery pack includes the battery module according to the fourth embodiment. The battery pack may include the single secondary battery according to the third embodiment in place of the battery module according to the fourth embodiment.

The battery pack according to the fifth embodiment may further include a protective circuit. The protective circuit has a function to control charging and discharging of the secondary battery. Alternatively, a circuit included in equipment where the battery pack serves as a power source (for example, electronic devices, automobiles, and the like) may be used as the protective circuit for the battery pack.

The battery pack according to the fifth embodiment may further include an external power distribution terminal. The external power distribution terminal is configured to externally output a current from the secondary battery, and/or to input an external current into the secondary battery. In other words, when the battery pack is used as a power source, the current is supplied to the outside via the external power distribution terminal. When the battery pack is charged, the charging current (including regenerative energy of motive force of vehicles such as automobiles) is supplied to the battery pack via the external power distribution terminal.

Next, an example of the battery pack according to the fifth embodiment will be described with reference to the drawings.

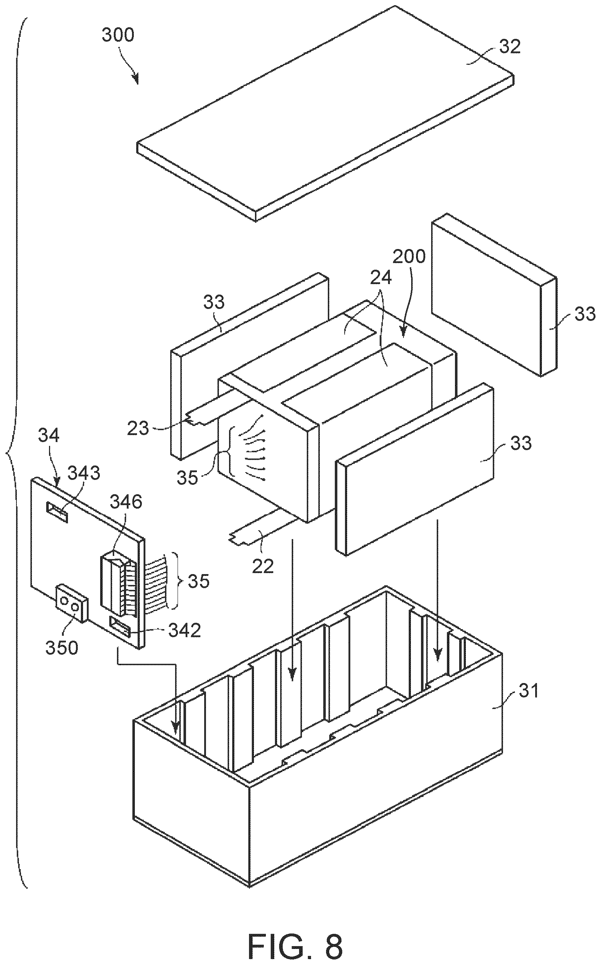

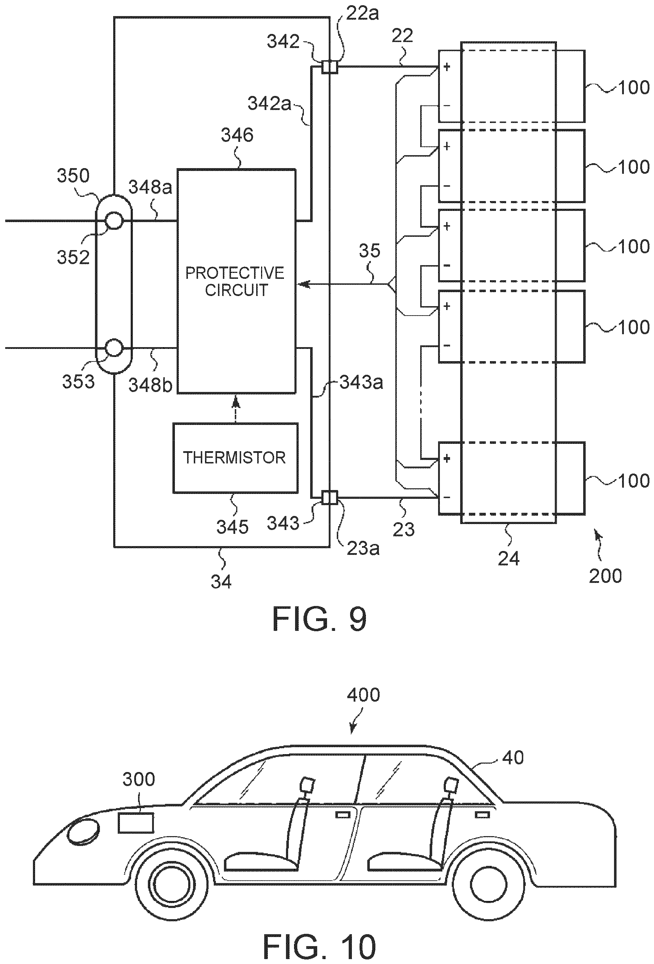

Fig. 8 is an exploded perspective view schematically showing an example of the battery pack according to the fifth embodiment. Fig. 9 is a block diagram showing an example of an electric circuit of the battery pack shown in Fig. 8.

A battery pack 300 shown in Figs. 8 and 9 includes a housing container 31, a lid 32, protective sheets 33, a battery module 200, a printed wiring board 34, wires 35, and an insulating plate (not shown).

The housing container 31 shown in Fig. 8 is a square bottomed container having a rectangular bottom surface. The housing container 31 is configured to be capable of housing the protective sheets 33, the battery module 200, the printed wiring board 34, and the wires 35. The lid 32 has a rectangular shape. The lid 32 covers the housing container 31 to house the battery module 200 and the like. Although not illustrated, the housing container 31 and the lid 32 are provided with openings, connection terminals, or the like for connection to an external device or the like.

The battery module 200 includes a plurality of single-batteries 100, a positive electrode side lead 22, a negative electrode side lead 23, and an adhesive tape 24.

At least one of the plurality of single-batteries 100 is the secondary battery according to the third embodiment. The plurality of single-batteries 100 are electrically connected in series, as shown in Fig. 10. The plurality of single-batteries 100 may be electrically connected in parallel, or connected in combination of in-series connection and in-parallel connection. When the plurality of single-batteries 100 are connected in parallel, the battery capacity increases as compared to a case in which they are connected in series.

The adhesive tape 24 fastens the plurality of single-batteries 100. The plurality of single-batteries 100 may be fixed using a heat shrinkable tape in place of the adhesive tape 24. In this case, the protective sheets 33 are disposed on both side surfaces of the battery module 200, and the heat shrinkable tape is wound around the battery module 200 and the protective sheets 33. Then, the heat shrinkable tape is shrunk by heating to bundle the plurality of single-batteries 100.

One end of the positive electrode side lead 22 is connected to the battery module 200. One end of the positive electrode side lead 22 is electrically connected to the positive electrode of one or more single-batteries 100. One end of the negative electrode side lead 23 is connected to the battery module 200. One end of the negative electrode side lead 23 is electrically connected to the negative electrodes of one or more single-batteries 100.

The printed wiring board 34 is provided along one face in the short side direction among the inner surfaces of the housing container 31. The printed wiring board 34 includes a positive electrode side connector 342, a negative electrode side connector 343, a thermistor 345, a protective circuit 346, wires 342a and 343a, an external power distribution terminal 350, a plus side wire (positive side wire) 348a, and a minus side wire (negative side wire) 348b. One main surface of the printed wiring board 34 faces one side surface of the battery module 200. An insulating plate (not shown) is interposed between the printed wiring board 34 and the battery module 200.

The other end 22a of the positive electrode side lead 22 is electrically connected to the positive electrode side connector 342. The other end 23a of the negative electrode side lead 23 is electrically connected to the negative electrode side connector 343.

The thermistor 345 is fixed to one main surface of the printed wiring board 34. The thermistor 345 detects the temperature of each of the single-batteries 100 and transmits detection signals thereof to the protective circuit 346.

The external power distribution terminal 350 is fixed to the other main surface of the printed wiring board 34. The external power distribution terminal 350 is electrically connected to a device existing outside the battery pack 300. The external power distribution terminal 350 includes a positive side terminal 352 and a negative side terminal 353.

The protective circuit 346 is fixed to the other main surface of the printed wiring board 34. The protective circuit 346 is connected to the positive side terminal 352 via the plus side wire 348a. The protective circuit 346 is connected to the negative side terminal 353 via the minus side wire 348b. The protective circuit 346 is electrically connected to the positive electrode side connector 342 via the wire 342a. The protective circuit 346 is electrically connected to the negative electrode side connector 343 via the wire 343a. Furthermore, the protective circuit 346 is electrically connected to each of the plurality of single-batteries 100 via the wires 35.

The protective sheets 33 are disposed on both inner surfaces of the housing container 31 along the long side direction and on the inner surface along the short side direction facing the printed wiring board 34 across the battery module 200. The protective sheets 33 are made of, for example, resin or rubber.

The protective circuit 346 controls charge and discharge of the plurality of single-batteries 100. The protective circuit 346 cuts off electric connection between the protective circuit 346 and the external power distribution terminal 350 (positive side terminal 352, negative side terminal 353) to external devices, based on detection signals transmitted from the thermistor 345 or detection signals transmitted from each single-battery 100 or the battery module 200.

Examples of the detection signal transmitted from the thermistor 345 include a signal indicating that the temperature of the single-battery 100 is detected to be a predetermined temperature or more. Examples of the detection signal transmitted from each of the single-batteries 100 or the battery module 200 include a signal indicating detection of over-charge, over-discharge, and overcurrent of the single-batteries 100. When detecting over charge or the like for each of the single-batteries 100, the battery voltage may be detected, or a positive electrode potential or a negative electrode potential may be detected. In the latter case, a lithium electrode to be used as a reference electrode is inserted into each of the single-batteries 100.

As the protective circuit 346, a circuit included in a device using the battery pack 300 as a power source (for example, an electronic device or an automobile or the like) may be used.

As described above, the battery pack 300 includes the external power distribution terminal 350. Therefore, the battery pack 300 can output a current from the battery module 200 to an external device and input a current from the external device to the battery module 200 via the external power distribution terminal 350. In other words, when the battery pack 300 is used as a power source, the current from the battery module 200 is supplied to the external device via the external power distribution terminal 350. When the battery pack 300 is charged, a charging current from an external device is supplied to the battery pack 300 via the external power distribution terminal 350. When the battery pack 300 is used as an in-vehicle battery, the regenerative energy of the motive force of a vehicle can be used as the charging current from the external device.

The battery pack 300 may include a plurality of battery modules 200. In this case, the plurality of battery modules 200 may be connected in series, in parallel, or connected in combination of in-series connection and in-parallel connection. The printed wiring board 34 and the wires 35 may be omitted. In this case, the positive electrode side lead 22 and the negative electrode side lead 23 may be respectively used as the positive side terminal 352 and negative side terminal 353 of the external power distribution terminal 350.

Such a battery pack is used, for example, for applications requiring excellent cycle performance when a large current is extracted. Specifically, the battery pack is used as, for example, a power source for electronic devices, a stationary battery, and an in-vehicle battery for various vehicles. Examples of the electronic device include a digital camera. The battery pack is particularly suitably used as an in-vehicle battery.

The battery pack according to the fifth embodiment includes the secondary battery according to the third embodiment or the battery module according to the fourth embodiment. Therefore, the battery pack according to the embodiment has a high capacity per volume.

### [Sixth Embodiment]

According to a sixth embodiment, a vehicle is provided. The battery pack according to the fifth embodiment is installed on this vehicle.

In the vehicle according to the sixth embodiment, the battery pack recovers, for example, regenerative energy from motive force of the vehicle. The vehicle may include a mechanism (regenerator) that converts kinetic energy of the vehicle into regenerative energy.

Examples of the vehicle according to the sixth embodiment include two-wheel to four-wheel hybrid electric automobiles, two-wheel to four-wheel electric automobiles, assist bicycles, and railway vehicles.

In the vehicle according to the sixth embodiment, the installing position of the battery pack is not particularly limited. For example, when the battery pack is installed on an automobile, the battery pack may be installed in the engine compartment of the vehicle, in rear parts of the vehicle body, or under seats.

The vehicle according to the sixth embodiment may have a plurality of battery packs installed. In this case, the batteries included in the respective battery packs may be electrically connected in series, electrically connected in parallel, or electrically connected in combination of in-series connection and in-parallel connection. For example, when each battery pack includes a battery module, the battery modules may be electrically connected in series, electrically connected in parallel, or electrically connected in combination of in-series connection and in-parallel connection. Alternatively, when each battery pack includes a single-battery, the batteries may be electrically connected in series, electrically connected in parallel, or electrically connected in combination of in-series connection and in-parallel connection.

Next, an example of the vehicle according to the sixth embodiment will be described with reference to the drawings.

Fig. 10 is a partially see-through view schematically showing an example of the vehicle according to the sixth embodiment.

A vehicle 400, shown in Fig. 10 includes a vehicle body 40 and a battery pack 300 according to the fifth embodiment. In the example shown in Fig. 10, the vehicle 400 is a four-wheel automobile.

The vehicle 400 may have a plurality of battery packs 300 installed. In this case, the batteries (for example, single-batteries or battery module) included in the battery packs 300 may be connected in series, connected in parallel, or connected in combination of in-series connection and in-parallel connection.

In Fig. 10, illustrated is an example where the battery pack 300 is installed in an engine compartment located at the front of the vehicle body 40. As described above, the battery pack 300 may be installed, for example, in rear sections of the vehicle body 40, or under a seat. The battery pack 300 may be used as a power source of the vehicle 400. The battery pack 300 can recover regenerative energy of motive force of the vehicle 400.

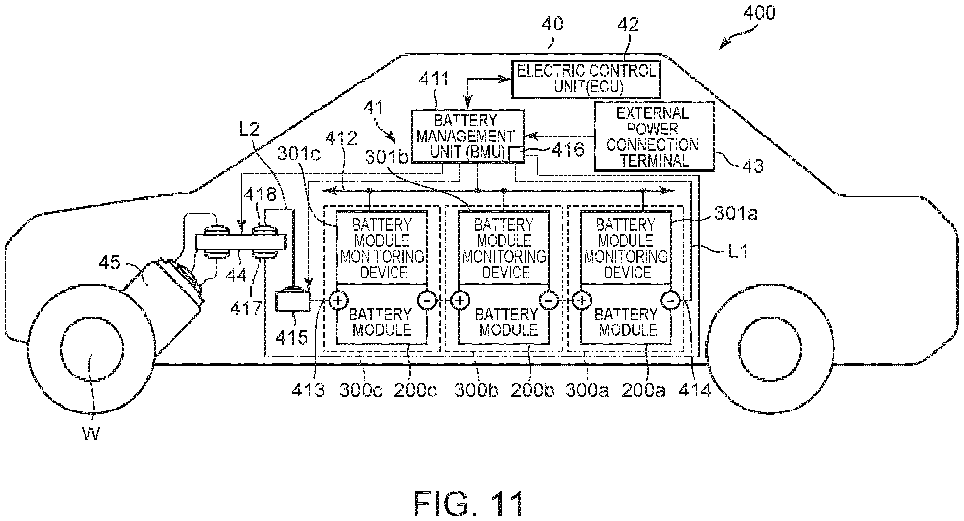

Next, an aspect of operation of the vehicle according to the sixth embodiment will be described with reference to Fig. 11.

Fig. 11 is a view schematically showing an example of a control system related to an electric system in the vehicle according to the sixth embodiment. A vehicle 400, shown in Fig. 11, is an electric automobile.

The vehicle 400, shown in Fig. 11, includes a vehicle body 40, a vehicle power source 41, a vehicle electric control unit (ECU) 42, which is a master controller of the vehicle power source 41, an external terminal (an external power connection terminal) 43, an inverter 44, and a drive motor 45.

The vehicle 400 includes the vehicle power source 41 installed, for example, in the engine compartment, in the rear sections of the automobile body, or under a seat. The position of the vehicle power source 41 installed in the vehicle 400 shown in Fig. 11 is schematically shown.

The vehicle power source 41 includes a plurality of (for example, three) battery packs 300a, 300b, and 300c, a battery management unit (BMU) 411, and a communication bus 412.

The battery pack 300a includes a battery module 200a and a battery module monitoring device 301a (for example, VTM: voltage temperature monitoring). The battery pack 300b includes a battery module 200b and a battery module monitoring device 301b. The battery pack 300c includes a battery module 200c and a battery module monitoring device 301c. The battery packs 300a to 300c are battery packs similar to the battery pack 300 described above, and the battery modules 200a to 200c are battery modules similar to the battery module 200 described above. The battery modules 200a to 200c are electrically connected in series. Each of the battery packs 300a, 300b, and 300c can be independently removed, and can be replaced with another battery pack 300.

Each of the battery modules 200a to 200c includes a plurality of single-batteries connected in series. At least one of the plurality of single-batteries is the secondary battery according to the third embodiment. Each of the battery modules 200a to 200c is charged and discharged via a positive electrode terminal 413 and a negative electrode terminal 414.

The battery management unit 411 performs communication with the battery module monitoring devices 301a to 301c and collects information such as voltages or temperatures for each of the single-batteries 100 included in the battery modules 200a to 200c included in the vehicle power source 41. As a result, the battery management unit 411 collects information on the maintenance of the vehicle power source 41.

The battery management unit 411 and the battery module monitoring devices 301a to 301c are connected via the communication bus 412. In the communication bus 412, a set of communication lines is shared by a plurality of nodes (the battery management unit 411 and one or more battery module monitoring devices 301a to 301c). The communication bus 412 is, for example, a communication bus configured based on control area network (CAN) standard.

The battery module monitoring devices 301a to 301c measure a voltage and a temperature of each single-battery in the battery modules 200a to 200c based on commands by communication from the battery management unit 411. It is possible, however, to measure the temperatures only at several points per battery module, and the temperatures of all of the single-batteries need not be measured.

The vehicle power source 41 may also include an electromagnetic contactor (for example, a switch device 415 shown in Fig. 11) for switching on and off electrical connection between the positive electrode terminal 413 and the negative electrode terminal 414. The switch device 415 includes a precharge switch (not shown), which is turned on when the battery modules 200a to 200c are charged, and a main switch (not shown), which is turned on when output from the battery modules 200a to 200c is supplied to a load. Each of the precharge switch and the main switch includes a relay circuit (not shown), which is switched on or off based on a signal provided to a coil disposed near the switch elements. The electromagnetic contactor such as the switch device 415 is controlled based on control signals from the battery management unit 411 or the vehicle ECU 42, which controls the operation of the entire vehicle 400.

The inverter 44 converts an input direct current voltage to a three-phase alternate current (AC) high voltage for driving a motor. Three-phase output terminals of the inverter 44 are connected to three-phase input terminals of the drive motor 45. The inverter 44 is controlled based on control signals from the battery management unit 411 or the vehicle ECU 42, which controls the entire operation of the vehicle. An output voltage from the inverter 44 is adjusted by controlling the inverter 44.

The drive motor 45 is rotated by electric power supplied from the inverter 44. The driving force generated by the rotation of the drive motor 45 is transmitted to an axle and drive wheels W via, for example, a differential gear unit.

The vehicle 400 also includes a regenerative brake mechanism (regenerator), though not shown. The regenerative brake mechanism rotates the drive motor 45 when the vehicle 400 is braked, and converts kinetic energy into regenerative energy as electric energy. The regenerative energy recovered in the regenerative brake mechanism is input into the inverter 44 and converted to a direct current. The converted direct current is input into the vehicle power source 41.

One terminal of a connection line L1 is connected to the negative electrode terminal 414 of the vehicle power source 41. The other terminal of the connection line L1 is connected to a negative electrode input terminal 417 of the inverter 44. A current detection unit (current detecting circuit) 416 in the battery management unit 411 is provided on the connection line L1 between the negative electrode terminal 414 and the negative electrode input terminal 417.

One terminal of a connection line L2 is connected to the positive electrode terminal 413 of the vehicle power source 41. The other terminal of the connection line L2 is connected to a positive electrode input terminal 418 of the inverter 44. The switch device 415 is provided on the connection line L2 between the positive electrode terminal 413 and the positive electrode input terminal 418.

The external terminal 43 is connected to the battery management unit 411. The external terminal 43 can be connected to, for example, an external power source.

The vehicle ECU 42 cooperatively controls the vehicle power source 41, the switch device 415, the inverter 44, and the like, together with other management devices and control devices including the battery management unit 411 in response to inputs operated by a driver or the like. Through the cooperative control by the vehicle ECU 42 and the like, output of electric power from the vehicle power source 41, charging of the vehicle power source 41, and the like are controlled, thereby managing the whole vehicle 400. Data concerning the maintenance of the vehicle power source 41, such as the remaining capacity of the vehicle power source 41, are transferred between the battery management unit 411 and the vehicle ECU 42 via communication lines.

The vehicle according to the sixth embodiment is installed with the battery pack according to the fifth embodiment. Since the capacity per mass of the battery pack is high, the degree of freedom in designing the vehicle is high. Therefore, various vehicles can be provided without impairing the performance of the vehicle.

### <EXAMPLES>

Hereinafter, the embodiments will be described in more detail based on Examples. It should be noted, however, that the present invention is not limited to the Examples described below.

### <Synthesis>

### (Example 1)

As described below, a titanium-niobium-tungsten composite oxide having a composition represented by Ti₄Nb₁₀W₄O₄₅ was synthesized by a solid phase reaction method.

As starting materials, titanium oxide, niobium oxide, and tungsten oxide were prepared. Here, as the tungsten oxide particles, particles having a particle size smaller than the particle sizes of titanium oxide and niobium oxide were selected, and contrivance was made to increase the particle contact and reaction surface of the tungsten particles. These starting materials were mixed at a predetermined composition ratio, and subjected to a dry pulverizing and mixing treatment. The obtained mixture was then put in a crucible made of alumina and was fired at 1100°C for 12 hours in air, followed by cooling in the furnace. The fired product was subjected to dry pulverization, and the pulverized product was subjected to sieving to adjust the particle size. An active material powder was obtained as described above.

### (Example 2) to (Example 7)

Materials were prepared under the same preparation conditions as in Example 1 except that the composition ratio of titanium oxide, niobium oxide, and tungsten oxide was changed according to a target composition, to obtain active material powders.

### (Example 8)

Starting materials were mixed at the same mixing ratio as that described in Example 1, and tantalum oxide (Ta₂O₅) was further added to the resulting mixture so that the amount of added Ta was 2000 ppm with respect to an estimated synthesis amount that would be obtained after firing of an active material powder. Thereafter, a material was prepared under the same preparation conditions as those in Example 1 to obtain an active material powder.

### (Example 9)

Starting materials were mixed at the same mixing ratio as that described in Example 1, and potassium oxide (K₂O) was further added to the resulting mixture so that the amount of added K was 1000 ppm with respect to an estimated synthesis amount that would be obtained after firing of an active material powder. Thereafter, a material was prepared under the same preparation conditions as in Example 1 except that a firing temperature was changed to 1050°C to obtain an active material powder.

### (Example 10)

Starting materials were mixed at the same mixing ratio as that described in Example 1, and iron oxide (Fe₂O₃) was further added to the resulting mixture so that the amount of added Fe was 2000 ppm with respect to an estimated synthesis amount that would be obtained after firing of an active material powder. Thereafter, a material was prepared under the same preparation conditions as those in Example 1 to obtain an active material powder.

### (Example 11)

Starting materials were mixed at the same mixing ratio as that described in Example 1, and phosphorus oxide (P₂O₅) was further added to the resulting mixture so that the amount of added P was 2000 ppm with respect to an estimated synthesis amount that would be obtained after firing of an active material powder. Thereafter, a material was prepared under the same preparation conditions as in Example 1 except that a firing temperature was changed to 1050°C to obtain an active material powder.

### (Example 12)

Starting materials were mixed at the same mixing ratio as that described in Example 1, and molybdenum oxide (MoO₃) was further added to the resulting mixture so that the amount of added Mo was 8000 ppm with respect to an estimated synthesis amount that would be obtained after firing of an active material powder. Thereafter, a material was prepared under the same preparation conditions as in Example 1 except that a firing temperature was changed to 1000°C to obtain an active material powder.

### (Example 13)

Starting materials were mixed at the same mixing ratio as that described in Example 1, and zirconium oxide (ZrO₂) was further added to the resulting mixture so that the amount of added Zr was 2000 ppm with respect to an estimated synthesis amount that would be obtained after firing of an active material powder. Thereafter, a material was prepared under the same preparation conditions as those in Example 1 to obtain an active material powder.

### (Comparative Example 1)

As described below, a titanium-niobium-tungsten composite oxide having a composition represented by Ti₂Nb₁₀W₅O₄₄ was synthesized by a solid phase reaction method.

As starting materials, titanium oxide, niobium oxide, and tungsten oxide were prepared. These starting materials were mixed at a predetermined composition ratio, and subjected to a dry pulverizing and mixing treatment. The obtained mixture was then put in a crucible made of alumina and was fired at 1200°C for 12 hours in air, followed by cooling in the furnace. The fired product was subjected to dry pulverization, and the pulverized product was subjected to sieving to adjust the particle size. An oxide powder was obtained as described above.

### <Measurement>

Powders respectively obtained in the above Examples and Comparative Example were observed with a scanning transmission electron microscope. Specifically, as described in detail above, the microstructure was observed by an image of 10 nm×10 nm by a STEM-HAADF image having a spherical aberration correction function. In addition, Wide-angle X-ray scattering measurement was performed. The measurement was performed according to the details described above. The obtained spectra were subjected to crystal structure analysis according to the Rietveld method. Furthermore, ICP emission spectrometry, BET specific surface area measurement according to an N₂ gas adsorption method, particle size distribution measurement, and scanning electron microscope observation were performed.

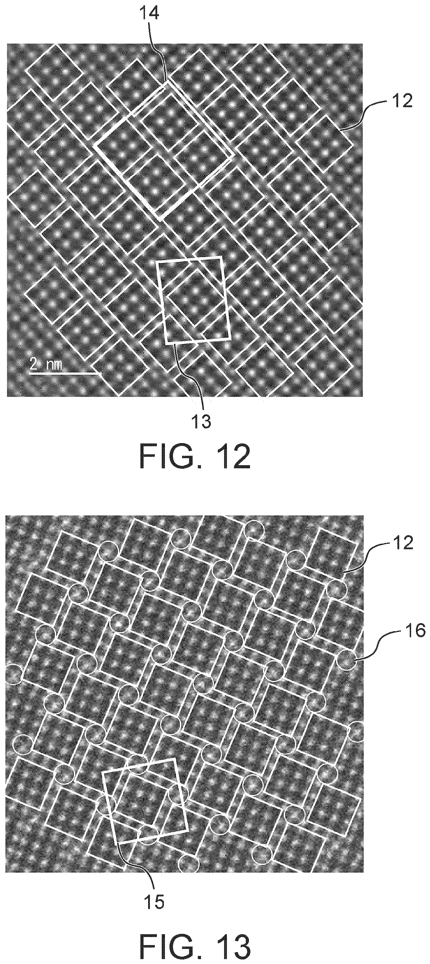

An example of results obtained by observing the microstructure using the STEM-HAADF image is shown in Figs. 12 and 13.

As a result of the structural analysis, the composite oxide obtained in Example 1 was identified as having a crystal structure in which crystal structures shown in Figs. 1 and 2, respectively, coexisted. Specifically, two phases of an orthorhombic structure and a monoclinic structure were used as estimation models. The orthorhombic structure is a crystal structure which belongs to Amma as the notation of space group (space group No. 63), has rhenium oxide-type block structures of 4×4=16 that includes a structure sharing edges of octahedra, and has a ratio A_{O}/A_{M} of 2.50 as a ratio of the number of oxygen to the number of metal elements per unit lattice. The monoclinic structure is a crystal structure which belongs to P21/n as the notation of space group (space group No. 14), has rhenium oxide-type block structures of 4×4=16 that includes octahedra, and has a ratio A_{O}/A_{M} of 2.50 as a ratio of the number of oxygen to the number of metal elements per unit lattice. The phases were identified as the above-described crystal structures because, when such crystal structures were used as estimation models, fitting was performed with the value of the reliability factor Rwp according to the Rietveld method becoming 9.75% for all the peaks that appeared at 5° to 70° excluding heterogeneous phases, and the position and relative intensity of the peaks were ascertained to have no contradiction. When the orthorhombic structure of Fig. 1 and the monoclinic structure of Fig. 2 were considered as units, the mixing ratio thereof was estimated to be 39:61 as a molar composition ratio.

Fig. 12 shows an example of observation results of STEM-HAADF images of the microstructure of the composite oxide obtained in Example 1. 4×4 rhenium oxide type block structures 12 are continuously present, and the unit lattice 13 of the monoclinic structure and the unit lattice 14 of the orthorhombic crystal can be observed.

As a result of the structural analysis, the composite oxide obtained in Comparative Example 1 was identified as having a tetragonal structure. Specifically, a crystal structure which belonged to I-4 as the notation of space group (space group No. 82), had rhenium oxide-type block structures of 4×4=16 that includes a structure sharing vertices of tetrahedra, and had a ratio A_{O}/A_{M} of 2.59 as a ratio of the number of oxygen to the number of metal elements per unit lattice was used as an estimation model. The phases were identified as the above-described crystal structures because, when such crystal structures were used as estimation models, fitting was performed with the value of the reliability factor R_{wp} according to the Rietveld method becoming 9.86% for all the peaks that appeared at 5° to 70° excluding heterogeneous phases, and the position and relative intensity of the peaks could be ascertained to have no contradiction.

Fig. 13 shows an example of observation results of STEM-HAADF images of the microstructure of the composite oxide obtained in Comparative Example 1. 4×4 rhenium oxide type block structures 12 are continuously present, and the unit lattice 15 of the tetragonal structure and the vertex sharing structure 16 of the tetrahedra can be observed.

### <Evaluation of Battery Performance>

The powders of the respective composite oxides obtained in the above Examples and Comparative Example were used as active materials to produce electrodes, as described below.

First, 100 parts by mass of an active material, 6 parts by mass of a conductive agent, and 4 parts by mass of a binder were dispersed in a solvent to prepare a slurry. Each of the composite material powders obtained by the above method was used as the active material. As the conductive agent, a mixture of acetylene black, carbon nanotubes, and graphite was used. As the binder, a mixture of carboxymethyl cellulose (CMC) and styrene butadiene rubber (SBR) was used. Pure water was used as the solvent.

Then, the obtained slurry was applied onto one surface of a current collector and the coating film was dried, to form an active material-containing layer. An aluminum foil having a thickness of 12 um was used as the current collector. Subsequently, the current collector and the active material-containing layer were pressed to obtain an electrode. The mass per unit area of the electrode was 60 g/m².

A nonaqueous electrolyte was prepared as follows. An electrolyte salt was dissolved in an organic solvent to obtain a liquid nonaqueous electrolyte. LiPF₆ was used as the electrolyte salt. The molar concentration of LiPF₆ in the nonaqueous electrolyte was 1 mol/L. A mixed solvent of ethylene carbonate (EC) and diethyl carbonate (DEC) was used as the organic solvent. A volume ratio of EC and DEC was 1:2.

Three-electrode beaker cells were produced using the electrode obtained by the above-described method as a working electrode, using a metal lithium foil as a counter electrode and a reference electrode, and using the nonaqueous electrolyte prepared by the above-described method.

The cycle performance of each of the cells produced was evaluated. Specifically, the cells were first charged at a charge current of 0.2 C at a temperature of 25°C until the battery voltage reached 0.4 V. Thereafter, the battery was discharged at a discharge current of 0.2 C until the battery voltage reached 3.0 V. Charge and discharge capacities at this time were measured, and a value of the capacity per mass of the active material was calculated for each of the charge and discharge. Also, the charge-discharge efficiency of the above initial charge-discharge was calculated (Initial Charge-Discharge Efficiency=[(Initial Discharge Capacity/Initial Charge Capacity)×100%]).

Fig. 16 is a graph showing the initial charge-discharge curve of the beaker cell. The charge-discharge curves of the cell using the composite oxide obtained in Example 1 are shown by solid lines (charge curve 51 and discharge curve 61). The charge-discharge curves of the cell using the composite oxide obtained in Comparative Example 1 are also shown by broken lines (charge curve 50 and discharge curve 60) .

Tables 1 and 2 below shows the details of the compositions and the crystal structures of the composite oxides synthesized in Examples and Comparative Example, as well as the performance thereof as active materials for a battery. Specifically, as the details of the composite oxide, the composition, crystal structure, and molar composition ratio of the composite oxide, the type of the additive element, and the firing temperature are shown. When no element is added, "-" is written in the item of the additive element. As the performance as an active material for a battery, the charge capacity and discharge capacity per mass, and the initial charge-discharge efficiency are shown.

For the compositions of the composite oxides shown in Table 1, formulas are shown which are obtained by multiplying chemical formulas by a certain coefficient so that the numerical values showing the stoichiometric proportion of the constituent elements are integers. For example, in Example 1 and Example 8-13, the composition of the composite oxide is expressed as Ti₄Nb₁₀W₄O₄₅, which is equal to a formula obtained by multiplying the chemical formula Ti_{0.8}Nb₂W_{0.8}O_{9.0} by a coefficient of 5. That is, the composite oxides synthesized in Example 1 and Example 8-13 correspond to a compound represented by LiₐTi_{b}Nb₂W_{c}O_{2b+3c+5+δ} and satisfying a=0, b=0.8, and c=0.8. The same applies to Example 2-7, and the numerical value indicating the stoichiometric ratio of the constituent elements is multiplied by a certain coefficient so that the valence of niobium is 10. Ti₂Nb₁₀W₅O₄₄ in Comparative Example 1 is equal to the formula obtained by multiplying the chemical formula of Ti_{0.4}Nb₂WO_{8.8} by a coefficient of 5.

**[Table 1]**

| [Table 1] | Composition | Crystal structure (molar composition ratio) | Additive element | Firing temperature (°C) | Charge capacity (mAh/g) | Discharge capacity (mAh/g) | Initial charge-discharge efficiency (%) |
|---|---|---|---|---|---|---|---|
| Example 1 | Ti₄Nb₁₀W₄O₄₅ | Orthorhombic:monoclinic (39:61) | - | 1100 | 334.2 | 303.6 | 90.8 |
| Example 2 | Ti₄Nb₁₀W_{4.5}O₄₅ | Orthorhombic:monoclinic (44:56) | - | 1100 | 340.3 | 308.3 | 90.6 |
| Example 3 | Ti_{4.5}Nb₁₀W₄O₄₅ | Orthorhombic:monoclinic (35:65) | - | 1100 | 325.1 | 290.7 | 89.4 |
| Example 4 | Ti_{3.5}Nb₁₀W_{3.5}O_{42.5} | Orthorhombic:monoclinic (37:63) | - | 1100 | 328.8 | 290.6 | 88.4 |
| Example 5 | Ti_{4.5}Nb₁₀W_{4.5}O_{47.5} | Orthorhombic:monoclinic (44:56) | - | 1100 | 326.5 | 295.4 | 90.5 |
| Example 6 | Ti₅Nb₁₀W₅O₅₀ | Orthorhombic:monoclinic (45:55) | - | 1100 | 325.7 | 290.8 | 89.3 |
| Example 7 | Ti_{5.5}Nb₁₀W_{5.5}O_{52.5} | Orthorhombic:monoclinic (46:54) | - | 1100 | 323.5 | 285.3 | 88.2 |

**[Table 2]**

| [Table 2] | Composition | Crystal structure (molar composition ratio) | Additive element | Firing temperature (°C) | Charge capacity (mAh/g) | Discharge capacity (mAh/g) | Initial charge-discharge efficiency (%) |
|---|---|---|---|---|---|---|---|
| Example 8 | Ti₄Nb₁₀W₄O₄₅ | Orthorhombic:monoclinic (39:61) | Ta | 1100 | 329.7 | 298.4 | 90.5 |
| Example 9 | Ti₄Nb₁₀W₄O₄₅ | Orthorhombic:monoclinic (42:58) | K | 1050 | 342.0 | 306.4 | 89.6 |
| Example 10 | Ti₄Nb₁₀W₄O₄₅ | Orthorhombic:monoclinic (37:63) | Fe | 1100 | 336.7 | 302.7 | 89.9 |
| Example 11 | Ti₄Nb₁₀W₄O₄₅ | Orthorhombic:monoclinic (42:58) | P | 1050 | 342.7 | 306.4 | 89.4 |
| Example 12 | Ti₄Nb₁₀W₄O₄₅ | Orthorhombic:monoclinic (46:54) | Mo | 1000 | 335.8 | 315.0 | 89.8 |
| Example 13 | Ti₄Nb₁₀W₄O₄₅ | Orthorhombic:monoclinic (38:62) | Zr | 1100 | 334.9 | 301.8 | 90.1 |
| Comparative Example 1 | Ti₂Nb₁₀W₅O₄₄ | Tetragonal (100) | - | 1200 | 300.9 | 268.2 | 89.1 |

As is clear from Tables 1 and 2, it is found that an active material which contains a composite oxide represented by the general formula LiₐTi_{b}Nb₂W_{c}O_{2b+3c+5+δ}, where subscripts in the formula satisfy 0 ≤ a ≤ b + 3c + 4, 0 < b < 2, 0 < c < 2, 1.9b + 2.85c + 4.75 ≤ δ ≤ 2.1b + 3.15c + 5.25, and the crystal structure is at least one of a monoclinic structure and an orthorhombic structure exhibits good initial charge-discharge efficiency and has a high charge-discharge capacity per mass. The reason for this is considered to be that tungsten oxide particles are selected to increase the number of contact points of the particles so as to suppress the sublimation of the tungsten element, and firing is performed in a range of a desirable firing temperature.

In Comparative Example 1, either the charge-discharge capacity or the initial charge-discharge efficiency was lower than the results of Examples 1 to 13. This is considered to be because the crystal structure does not correspond to either the monoclinic structure or the orthorhombic structure because the particles are not devised and the firing temperature is out of the desired range in Comparative Example 1.

In Examples, a part of the composition within the range of the subscript in the general formula is shown, but even if the composition is other than the composition of Examples, the same effect as that of the present embodiment can be obtained as long as the composition is within the range. The synthesized composite oxide shows an example of the composite oxide synthesized by the solid phase reaction method, but even when the sol-gel method is used, the same effect as that of the composite oxide synthesized by the solid phase reaction method can be obtained.

According to one or more embodiments and Examples described above, an active material containing a composite oxide is provided. The composite oxide is represented by the general formula LiₐTi_{b}Nb₂W_{c}O_{2b+3c+5+δ} and subscripts in the formula satisfy 0 ≤ a ≤ b + 3c + 4, 0 < b < 2, 0 < c < 2, 1.9b + 2.85c + 4.75 ≤ δ ≤ 2.1b + 3.15c + 5.25. The crystal structure of the composite oxide is at least one of a monoclinic structure and an orthorhombic structure. The active material according to the embodiment can provide an electrode capable of achieving a high-capacity secondary battery, a high-capacity secondary battery and battery pack, and a vehicle including the battery pack.

Although some embodiments of the present invention have been described, these embodiments have been presented as examples, and are not intended to limit the scope of the invention. These novel embodiments can be implemented in various other forms, and various omissions, substitutions, and changes can be made without departing from the gist of the invention. These embodiments and modifications thereof are included in the scope and gist of the invention, and are included in the invention described in the claims and the equivalent scope thereof.

Hereinafter, the invention according to the embodiment will be additionally described.
<1> An active material comprising a composite oxide represented by the general formula LiₐTi_{b}Nb₂W_{c}O_{2b+3c+5+δ} and satisfying 0 ≤ a ≤ b + 3c + 4, 0 < b < 2, 0 < c < 2, 1.9b + 2.85c + 4.75 ≤ δ ≤ 2.1b + 3.15c + 5.25, wherein
   a crystal structure of the composite oxide is at least one of a monoclinic structure and an orthorhombic structure.
<2> The active material according to <1>, wherein the composite oxide has a vertex sharing structure including a rhenium oxide type block structure in which 16 octahedra are configured to share vertices.
<3> The active material according to <1> or <2>, wherein the vertex sharing structure is configured such that blocks of the block structure share edges of the octahedra.
<4> The active material according to any one of <1> to <3>, further comprising one or more elements selected from the group consisting of V, Ta, Fe, Bi, Sb, As, P, Cr, Mo, B, Na, K, Mg, Al, Ca, Y, Zr, and Si.
<5> An electrode comprising the active material according to any one of <1> to <4>.
<6> A secondary battery comprising:
   a positive electrode;
   a negative electrode; and
   an electrolyte;
   wherein at least one of the positive electrode and the negative electrode is the electrode according to <5>.
<7> A battery pack comprising the secondary battery according to <6>.
<8> The battery pack according to <7>, further comprising:
   an external power distribution terminal; and
   a protective circuit.
<9> The battery pack according to <7> or <8> comprising
   a plurality of the secondary batteries, wherein
   the secondary batteries are electrically connected in series, in parallel, or in combination of in-series and in-parallel.
<10> A vehicle comprising the battery pack according to any one of <7> to <9>.
<11> The vehicle according to <10> comprising a mechanism that converts kinetic energy of the vehicle into regenerative energy.

## Claims

1. An active material comprising a composite oxide represented by the general formula LiₐTi_{b}Nb₂W_{c}O_{2b+3c+5+δ} and satisfying 0 ≤ a ≤ b + 3c + 4, 0 < b < 2, 0 < c < 2, 1.9b + 2.85c + 4.75 ≤ δ ≤ 2.1b + 3.15c + 5.25, wherein
a crystal structure of the composite oxide is at least one of a monoclinic structure and an orthorhombic structure.

2. The active material according to claim 1, wherein the composite oxide has a vertex sharing structure including a rhenium oxide type block structure in which 16 octahedra are configured to share vertices.

3. The active material according to claim 2, wherein the vertex sharing structure is configured such that blocks of the block structure share edges of the octahedra.

4. The active material according to any one of claims 1 to 3, further comprising one or more elements selected from the group consisting of V, Ta, Fe, Bi, Sb, As, P, Cr, Mo, B, Na, K, Mg, Al, Ca, Y, Zr, and Si.

5. An electrode comprising the active material according to any one of claims 1 to 4.

6. A secondary battery comprising:
a positive electrode;
a negative electrode; and
an electrolyte;
wherein at least one of the positive electrode and the negative electrode is the electrode according to claim 5.

7. A battery pack comprising the secondary battery according to claim 6.

8. The battery pack according to claim 7, further comprising:
an external power distribution terminal; and
a protective circuit.

9. The battery pack according to claim 7 or 8 comprising
a plurality of the secondary batteries, wherein
the secondary batteries are electrically connected in series, in parallel, or in combination of in-series and in-parallel.

10. A vehicle comprising the battery pack according to any one of claims 7 to 9.

11. The vehicle according to claim 10, comprising a mechanism that converts kinetic energy of the vehicle into regenerative energy.
